# EUROPEAN PATENT APPLICATION

(11) **EP 1 775 984 A2**
(43) Date of publication of application: **18.04.2007**
(21) Application number: 06021729.6
(22) Date of filing: 17.10.2006
(51) Int. Cl.: H04Q 7/38

(54) **Apparatus and method for supporting handover in a wireless access communication system**

(30) Priority: 17.10.2005 KR 20050097753
(71) Applicant: Samsung Electronics Co., Ltd., Yeongtong-gu Suwon-si, Gyeonggi-do (KR)
(72) Inventor: Kang, Hyun-Jeong, Seoul (KR); Joo, Pan-Yuh, Seoul (KR); Son, Jung-Je, Bundang-gu, Seongnam-si Gyeonggi-do (KR); Cho, Jae-Weon, Yeongtong-gu Suwon-si, Gyeonggi-do (KR); Lim, Hyoung-Kyu, Yeongdeungpo-gu, Seoul (KR); Son, Yeong-Moon, Anyang-si, Gyeonggi-do (KR); Lee, Sung-Jin, Seoul (KR); Lee, Mi-Hyun, Seoul (KR); Hong, Song-Nam, Seoul (KR); Kim, Young-Ho, Yeongtong-gu,Suwon-si Gyeonggi-do (KR)
(74) Representative: Grünecker, Kinkeldey, Stockmair & Schwanhäusser Anwaltssozietät

(57) **Abstract**

An apparatus and a method for supporting an MS-initiated handover in a multi-hop relay BWA communication system are provided. An MS determines whether a handover is required by measuring the strengths of signals received from neighbor BSs and neighbor RSs. If the handover is required, the MS sends to a serving station a handover request message including MS-recommended target neighbor node list information, and receives from the serving station a handover response message including serving station-recommended target neighbor node list information.

## Description

### PRIORITY

This application claims priority under 35 U.S.C. § 119 to an application filed in the Korean Intellectual Property Office on October 17, 2005 and assigned Serial No. 2005-97753, the contents of which are incorporated herein by reference.

### BACKGROUND OF THE INVENTION

### 1. Field of the Invention

The present invention relates generally to a multi-hop relay Broadband Wireless Access (BWA) communication system, and in particular, to an apparatus and method for supporting a Mobile Station (MS)-initiated handover.

### 2. Description of the Related Art

Provisioning of services with diverse Quality of Service (QoS) levels at about 100Mbps to users is an active study area for the future-generation 4^{th} Generation (4G) communication system. Particularly, active research is being conducted on provisioning of high-speed service by ensuring mobility and QoS to a BWA communication system such as Wireless Local Area Network (WLAN) and Wireless Metropolitan Area Network (WMAN). Such major examples are Institute of Electrical and Electronics Engineers (IEEE) 802.16a and IEEE 802.16e.

The IEEE 802.16a and IEEE 802.16e communication systems adopt Orthogonal Frequency Division Multiplexing/Orthogonal Frequency Division Multiple Access (OFDM/OFDMA) to physical channels. IEEE 802.16a considers only a single-cell structure with no regard to mobility of Subscriber Stations (SSs). In contrast, IEEE 802.16e supports the SS' mobility to the IEEE 802.16a communication system. Hereinafter, a mobile SS is called an MS.

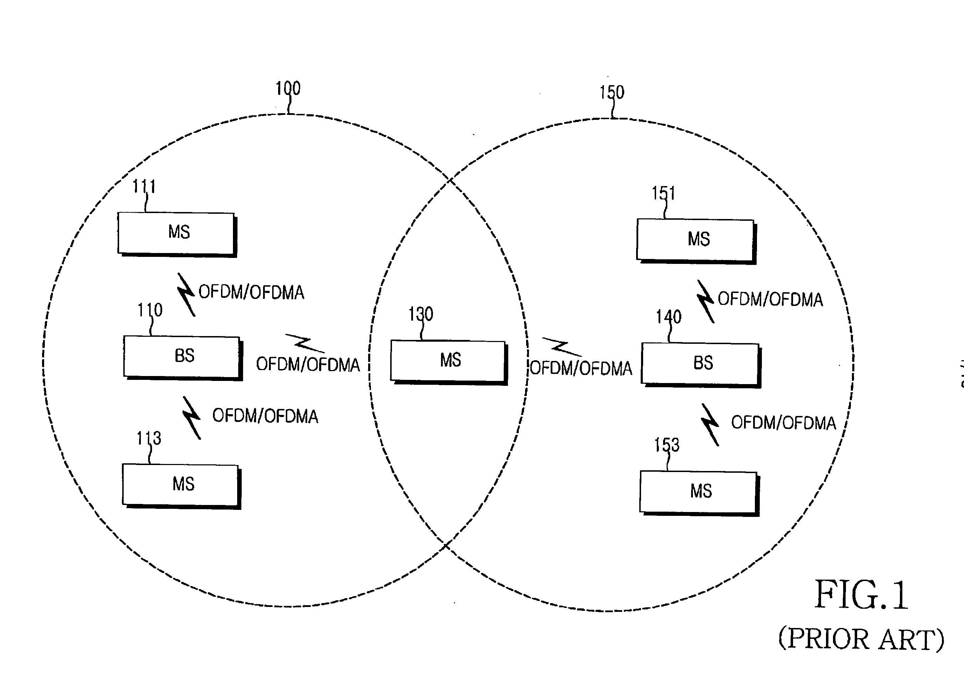

FIG. 1 illustrates the configuration of a conventional IEEE 802.16e communication system.

Referring to FIG. 1, the IEEE 802.16e communication system is configured in a multi-cell structure. Specifically, it includes cells 100 and 150, Base Stations (BSs) 110 and 140 for managing the cells 100 and 150, respectively, and a plurality of MSs 111, 113, 130, 151 and 153. Signals are sent in OFDM/OFDMA between the BSs 110 and 140 and the MSs 111, 113, 130, 151 and 153. The MS 130 is located in a cell boundary area between the cells 100 and 150, i.e. in a handover region. When the MS 130 moves to the cell 150 managed by the BS 140 during signal transmission/reception to/from the BS 110, the serving BS of the MS 130 is changed from the BS 110 to the BS 140.

Since signaling is carried out between an MS and a fixed BS via a direct link as illustrated in FIG. 1, a highly reliable radio communication link can be established between them in the typical IEEE 802.16e communication system. However, due to the fixed nature of BSs, a wireless network cannot be flexibly configured. As a result, the IEEE 802.16e communication system is not effective in efficiently providing communication services under a radio environment experiencing a fluctuating traffic distribution and substantial variation in the number of required calls.

These problems may be solved by applying a multi-hop relay data transmission scheme using fixed Relay Stations (RSs), mobile RSs, or conventional MSs. The multi-hop relay wireless communication system can advantageously reconfigure a network rapidly according to a communication environmental change and enables efficient operation of the entire wireless network. It can expand cell coverage and increase system capacity. When the channel status between a BS and an MS is poor, an RS is installed between them so that the resulting establishment of a multi-hop relay path through the RS renders a better radio channel available to the MS. With the use of the multi-hop relay scheme at a cell boundary where the channel status is poor, high-speed data channels become available and the cell coverage is expanded.

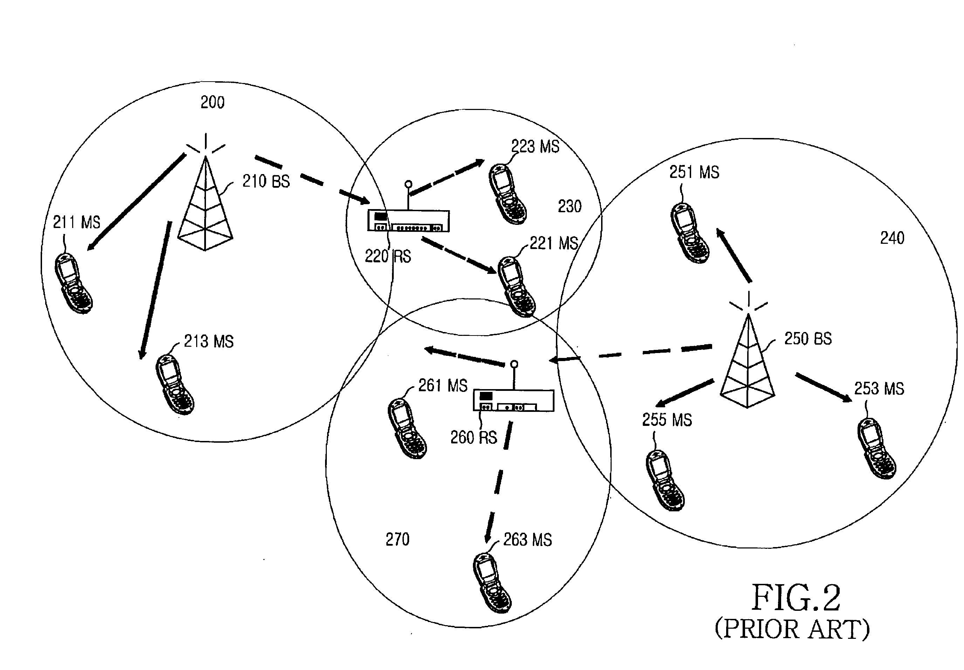

FIG. 2 illustrates the configuration of a conventional multi-hop relay BWA communication system.

Referring to FIG. 2, the multi-hop relay BWA communication system, which is configured in a multi-cell structure, includes cells 200 and 240 managed by BSs 210 and 250, respectively, a plurality of MSs 211 and 213 within the coverage area of the cell 200, a plurality of MSs 221 and 223 managed by the BS 210 but located in an area 230 outside the cell 200, an RS 220 for providing a multi-hop relay path between the BS 210 and the MSs 221 and 223 within the area 230, a plurality of MSs 251, 253 and 255 within the coverage area of the cell 240, a plurality of MSs 261 and 263 managed by the BS 250 but in an area 270 outside the cell 240, and an RS 260 for providing a multi-hop relay path between the BS 250 and the MSs 261 and 263 within the area 270. Signals are sent in OFDM/OFDMA between the BSs 210 and 250, the RSs 220 and 260 and the MSs 211, 213, 221, 223, 251, 253, 255, 261 and 263.

Although the MSs 211 and 213 within the coverage area of the cell 200 and the RS 220 can communicate directly with the BS 210, the MSs 221 and 223 within the area 230 cannot communicate with the BS 210, directly. Therefore, the RS 220 covering the area 230 relays signals between the BS 210 and the MSs 211 and 223. That is, the MSs 221 and 223 exchange signals with the BS 210 through the RS 220. Meanwhile, although the MSs 251, 253 and 255 within the coverage area of the cell 240 and the RS 260 can communicate directly with the BS 250, the MSs 261 and 263 within the area 270 cannot directly communicate with the BS 250. Therefore, the RS 260 covering the area 270 relays signals between the BS 250 and the MSs 261 and 263. That is, the MSs 261 and 263 exchange signals with the BS 250 through the RS 260.

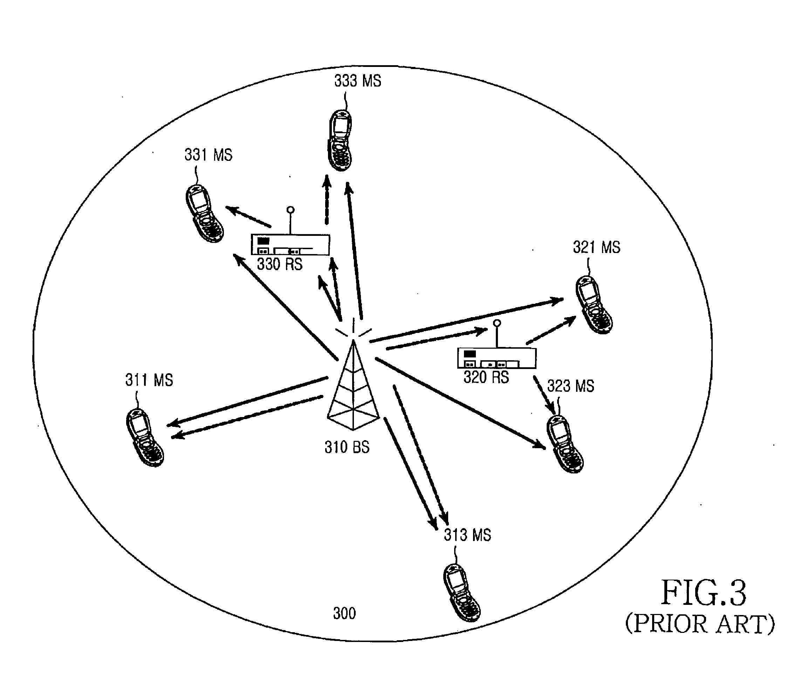

FIG. 3 illustrates the configuration of a conventional multi-hop relay BWA communication system configured to increase system capacity.

Referring to FIG. 3, the multi-hop relay wireless communication system includes a BS 310, a plurality of MSs 311, 313, 321, 323, 331 and 333, and RSs 320 and 330 for providing multi-hop relay paths between the BS 310 and the MSs. Signaling is carried out in OFDM/OFDMA among the BS 310, the RSs and the MSs. The BS 310 manages a cell 300, and the MSs 311, 313, 321, 323, 331 and 333 within the coverage area of the cell 300 and the RSs 320 and 330 can communicate directly with the BS 310.

Yet, the direct links between the BS 310 and the MSs 321, 323, 331 and 333 close to the boundary of the cell 300 may have low Signal-to-Noise Ratios (SNRs). Therefore, the RS 320 relays unicast traffic between the BS 310 and the MSs 321 and 323 so that the MSs 321 and 323 send and receive unicast traffic to and from the BS 310 via the RS 320. The RS 330 relays unicast traffic between the BS 310 and the MSs 331 and 333 so that the MSs 331 and 333 send and receive unicast traffic to and from the BS 310 via the RS 330. That is, the RSs 320 and 330 provide high-speed data transmission paths to the MSs 321, 323, 331 and 333, thereby increasing the effective data rates of the MSs and the system capacity.

In the multi-hop relay BWA communication systems illustrated in FIGs. 2 and 3, the RSs 220, 260, 320 and 330 are infrastructure RSs installed and managed by the BSs 210, 250 and 310, or client RSs that serve MSs. The RSs 220, 260, 320 and 330 may also be fixed, nomadic (e.g. laptop) or mobile (e.g. MSs).

In the above-described multi-hop relay wireless communication system, an MS may move out of the service area of a BS or an RS while directly communicating with the BS or via the RS, which triggers a handover. Accordingly, there exists a need for defining a method and procedure for processing a handover for the MS in the multi-hop relay wireless communication system.

### SUMMARY OF THE INVENTION

An object of the present invention is to substantially solve at least the above problems and/or disadvantages and to provide at least the advantages below. Accordingly, an object of the present invention is to provide an apparatus and method for supporting an MS-initiated handover in a multi-hop relay BWA communication system.

Another object of the present invention is to provide an apparatus and method for providing a seamless communication service to an MS that has been handed over to a target node in a multi-hop relay BWA communication system.

The above objects are achieved by providing an apparatus and method for supporting an MS-initiated handover in a multi-hop relay BWA communication system.

According to the present invention, in a method of requesting a handover in an MS in a multi-hop relay BWA communication system, the MS determines whether a handover is required by measuring the strengths of signals received from neighbor BSs and neighbor RSs. If the handover is required, the MS sends to a serving station a handover request message including MS-recommended target neighbor node list information, and receives from the serving station a handover response message including serving station-recommended target neighbor node list information.

According to the present invention, in a method of supporting an MS-initiated handover in a serving BS in a multi-hop relay BWA communication system, the serving BS receives from an MS a handover request message including MS-recommended target neighbor node list information. The serving BS configures new handover request messages, sends the new handover request messages to target neighbor nodes listed in the MS-recommended target neighbor node list information, and receives from the target neighbor nodes handover response messages including information indicating whether the handover of the MS is supported, and handover information required for the handover of the MS. The serving BS configures a serving BS-recommended target neighbor node list information using the received information, configures a new handover response message including the serving BS-recommended target neighbor node list information, and sends the new handover response message to the MS.

According to the present invention, in a method of supporting an MS-initiated handover in a serving RS in a multi-hop relay BWA communication system, upon receipt of a handover request message from an MS, the serving RS adds MS Identifier (ID) encoding information to the handover request message and sends the handover request message with the MS ID encoding information to a BS. The serving RS receives a handover response message including the MS ID encoding information from the BS. The serving RS eliminates the MS ID encoding information from the handover response message and sends the handover response message free of the MS ID encoding information to the MS.

According to the present invention, in a method of supporting an MS-initiated handover in a serving RS in a multi-hop relay BWA communication system, the serving RS receives from an MS a handover request message including MS-recommended target neighbor node list information. The serving RS reconfigures target neighbor node list information using the handover request message and sends to the MS a handover response message including the reconfigured target neighbor node list information.

According to the present invention, in a method of supporting an MS-initiated handover in a serving BS in a multi-hop relay BWA communication system, the serving BS receives from a serving RS a handover request message including MS-recommended target neighbor node list information. If a neighbor cell node is included in the MS-recommended target neighbor node list information, the serving BS sends a new handover request messages to a neighbor cell BS managing the neighbor cell node. If a serving cell node is included in the MS-recommended target neighbor node list information, the serving BS sends a handover request inform message to the serving cell node. The serving BS receives a handover response message including handover information of the MS from the neighbor cell BS or the serving cell node. The serving BS sends to the serving RS a new handover response message including the handover information of the MS.

According to the present invention, in a method of supporting an MS-initiated handover in a cell BS in a multi-hop relay BWA communication system, the cell BS receives from a neighbor cell BS a handover request message of an MS belonging to the neighbor cell BS. The cell BS determines whether each candidate node supports a handover of the MS based on the handover request message and sends to the neighbor cell BS a handover response message including information indicating whether the handover of the MS is supported, and handover information of the MS.

According to the present invention, in a method of supporting an MS-initiated handover in a neighbor RS in a multi-hop relay BWA communication system, the neighbor RS receives a handover request inform message from a serving station during a normal communication procedure. The neighbor RS determines whether to support a handover of an MS according to the handover request inform message, and sends a handover request response message including handover information of the MS to the serving station.

According to the present invention, in an apparatus for supporting an MS-initiated handover in a multi-hop relay BWA communication system, an MS determines whether a handover is required. If the handover is required, the MS sends to a serving BS or a serving RS a handover request message including an MS-recommended target node list and receives a handover response message from the serving BS or the serving RS. Then the MS determines whether to confirm, cancel or reject the handover according to the handover response message. Upon receipt of the handover request message from the MS or an RS, the serving BS notifies target neighbor nodes of the possible handover of the MS. The serving BS acquires information indicating whether the handover is supported and handover information from the target neighbor nodes, and sends to the MS or the RS the handover response message including a serving BS-recommended target neighbor node list.

According to the present invention, in a method of supporting an MS-initiated handover in an RS in a multi-hop relay BWA communication system, upon receipt of a handover request message from an MS, the RS forwards the handover request message to a BS. Upon receipt of a handover response message including handover information of the MS from the BS, the RS forwards the handover response message to the MS. Upon receipt of a handover indication message indicating handover confirm, handover cancel or handover reject from the MS, the RS forwards the handover indication message to the BS. Upon receipt of a handover notify message from the BS, the RS releases a context from the MS.

According to the present invention, in a method of supporting an MS-initiated handover in an RS in a multi-hop relay BWA communication system, the RS receives a handover request message from an MS and forwards the handover request message to BS. Upon receipt of a handover command message including a handover direction for a handover of the MS from the BS, the RS configures a handover response message based on the handover direction and sends the handover response message to the MS.

According to the present invention, in a method of supporting an MS-initiated handover in a BS in a multi-hop relay BWA communication system, upon receipt of a handover request message from an MS via an RS, the BS collects MS handover information for the MS and determines a handover direction for the MS. The BS then configures a handover command message including the MS handover information and the handover direction and sends the handover command message to the RS.

### BRIEF DESCRIPTION OF THE DRAWINGS

The above and other objects, features and advantages of the present invention will become more apparent from the following detailed description when taken in conjunction with the accompanying drawings in which:
FIG. 1 illustrates the configuration of a conventional IEEE 802.16e communication system;
FIG. 2 illustrates the configuration of a conventional multi-hop relay BWA communication system;
FIG. 3 illustrates the configuration of a conventional multi-hop relay BWA communication system configured to increase system capacity;
FIG. 4 is a flowchart illustrating an operation of an MS for requesting a handover to a serving station in a multi-hop relay BWA communication system according to the present invention;
FIG. 5 is a flowchart illustrating an operation of a serving BS, when it receives the handover request from the MS in the multi-hop relay BWA communication system according to the present invention;
FIG. 6 is a flowchart illustrating an operation of a serving RS, when it receives the handover request from the MS in the multi-hop relay BWA communication system according to the present invention;
FIG. 7 is a flowchart illustrating an operation of the serving RS, when it receives the handover request from the MS in the multi-hop relay BWA communication system according to the present invention;
FIG. 8 is a flowchart illustrating an operation of the serving RS for compiling a candidate node list to support the handover for the MS, when it receives the handover request from the MS in the multi-hop relay BWA communication system according to the present invention;
FIG. 9 is a flowchart illustrating an operation of the serving BS, when it receives the handover request from the MS in the multi-hop relay BWA communication system according to the present invention;
FIG. 10 is a flowchart illustrating an operation of a neighbor cell BS, when it receives the MS's handover request in the multi-hop relay BWA communication system according to the present invention;
FIG. 11 is a flowchart illustrating an operation of a neighbor RS, when it receives the MS's handover request in the multi-hop relay BWA communication system according to the present invention;
FIG. 12 is a diagram illustrating a signal flow for network re-entry between the MS and a target node in the multi-hop relay BWA communication system according to the present invention;
FIG. 13 is a block diagram of the MS (the RS or the BS) according to the present invention;
FIG. 14 is a diagram illustrating a signal flow for a handover involving an RS that forwards handover control information for the MS in the multi-hop relay BWA communication system according to the present invention;
FIG. 15 is a flowchart illustrating an operation in the serving RS for processing a command associated with support of an MS-initiated handover, received from the serving BS in the multi-hop relay BWA communication system according to the present invention; and
FIG. 16 is a flowchart illustrating an operation in the serving BS for commanding the serving RS to support the MS-initiated handover in the multi-hop relay BWA communication system according to the present invention.

### DETAILED DESCRIPTION OF THE PREFERRED EMBODIMENTS

Preferred embodiments of the present invention will be described herein below with reference to the accompanying drawings. In the following description, well-known functions or constructions are not described in detail for the sake of clarity and conciseness.

The present invention discloses an apparatus and method for supporting an MS-initiated handover in a multi-hop relay BWA communication system that operates in OFDM/OFDMA, for example. As a physical channel signal is delivered on a plurality of subcarriers, the OFDM/OFDMA operation enables high-speed data transmission. Also, the MS's mobility is supported because the multi-hop relay BWA communication system has a multi-cell structure.

While the present invention is described in the context of the BWA communication system, it is to be understood that the present invention is applicable to any multi-hop relay cellular communication system.

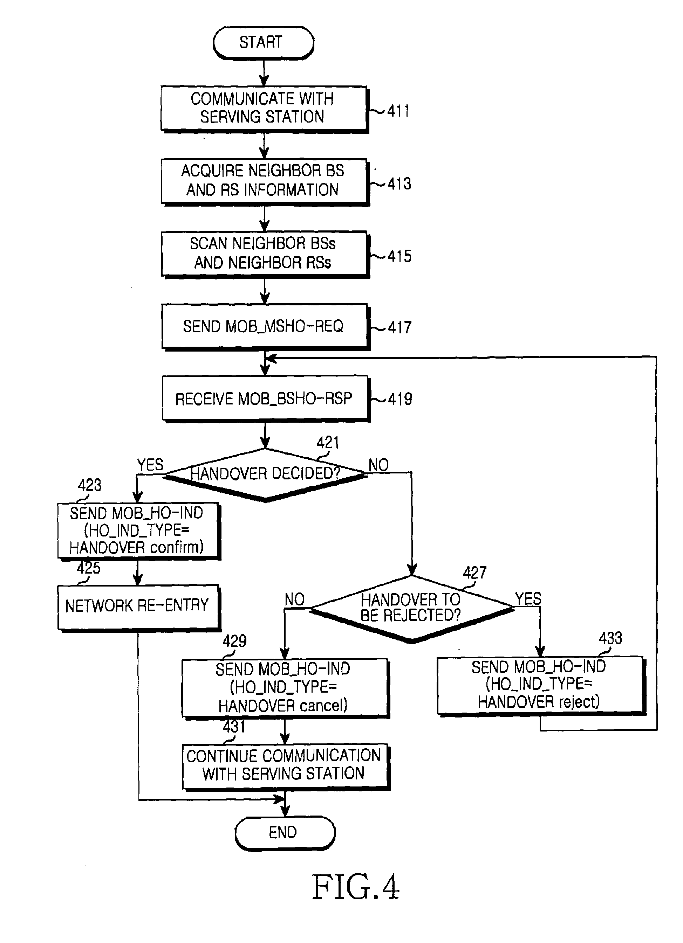

FIG. 4 is a flowchart illustrating an operation of an MS for requesting a handover to a serving station in the multi-hop relay BWA communication system according to the present invention.

Referring to FIG. 4, the MS communicates with the serving station in step 411 and acquires information about neighbor BSs and neighbor RSs from the serving station in step 413. The serving station can be a serving BS or a serving RS. In step 415, the MS determines whether a handover is required by scanning, i.e. measuring the strengths of signals received from the neighbor BSs and the neighbor RSs indicated by the neighbor BS and RS information. During scanning, the MS may detect a neighbor node offering a stronger signal than the serving station or a neighbor node that can be a target node for a handover according to a threshold. In this manner, the MS determines whether a handover to a particular neighbor node is required.

If the handover is required, the MS sends an MS HANDOVER REQUEST (MOB_MSHO-REQ) message to the serving station in step 417.

The MOB_MSHO-REQ message has the following configuration provided in Table 1.

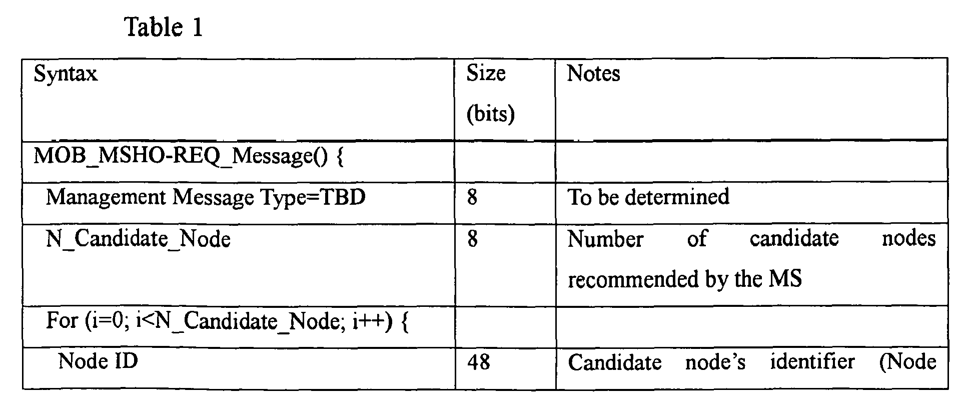

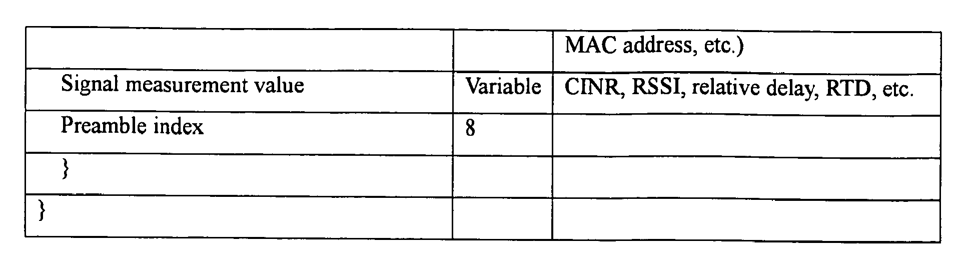

Referring to Table 1, the MOB_MSHO-REQ message includes a plurality of Information Elements (IEs). The IEs are Management Message Type indicating the type of the transmitted message, N_Candidate_Node indicating the number of neighbor nodes recommended as candidate nodes, and a list of the candidate nodes. Information about the neighbor nodes in the candidate node list provides the IDs and signal measurement values of the candidate nodes. The signal measurement values can be Carrier-to-Interference Noise Ratios (CINRs), Received Signal Strength Indications (RSSIs), relative delays or Round Trip Delays (RTDs). The IDs of the candidate nodes can be their Medium Access Control (MAC) addresses. The candidate nodes include a BS or an RS in a neighbor cell, the serving BS or a neighbor RS in a serving cell.

In step 419, the MS receives a BS HANDOVER RESPONSE (MOB_BSHO-RSP) message from the serving station.

The MOB_BSHO-RSP message has the following configuration provided in Table 2.

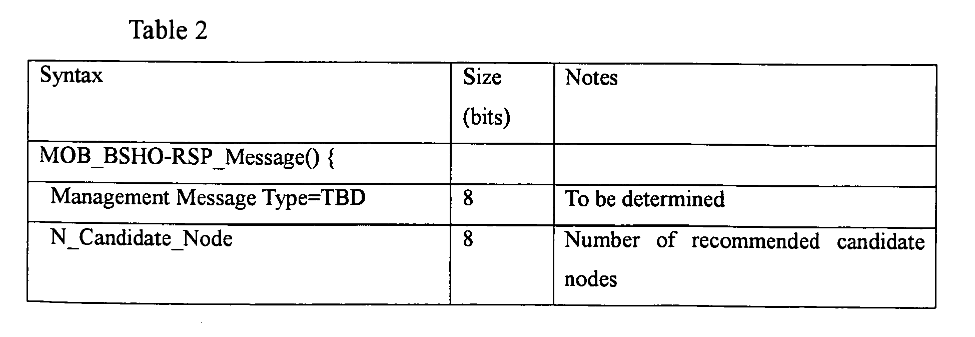

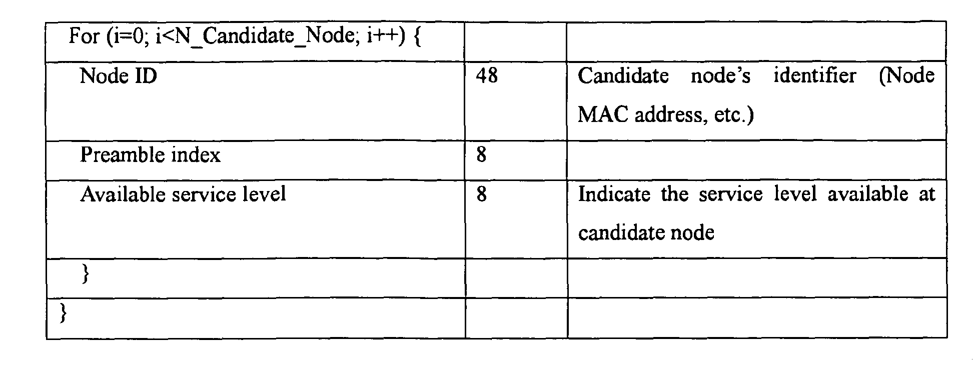

Referring to Table 2, the MOB_BSHO-RSP message includes a plurality of IEs. The IEs contain Management Message Type indicating the type of the transmitted message and a list of neighbor nodes that the serving station recommends as candidate nodes for the handover. Information about the candidate nodes in the candidate node list provides the IDs and preamble indexes of the candidate nodes and service levels at which the MS can receive a service when it is handed over to the candidate nodes. The IDs of the candidate nodes can be their addresses. The candidate nodes include a BS or an RS in a neighbor cell, the serving BS or a neighbor RS in the serving cell.

In step 421, the MS selects the best neighbor node as a target node from the candidate node list set in the MOB_BSHO-RSP message. When deciding on a handover to the target node, the MS sends an HO INDICATION (MOB_HO-IND) message set to Handover confirm to the serving station in step 423.

The MOB_HO-IND message has the following configuration provided in Table 3.

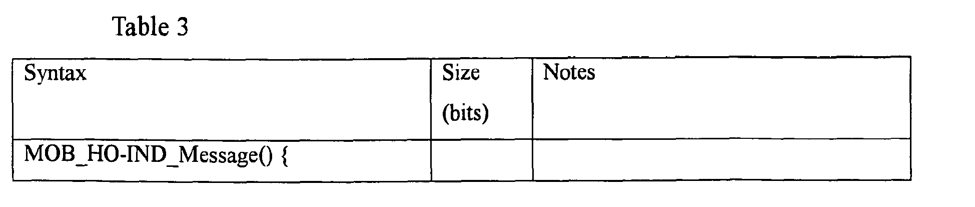

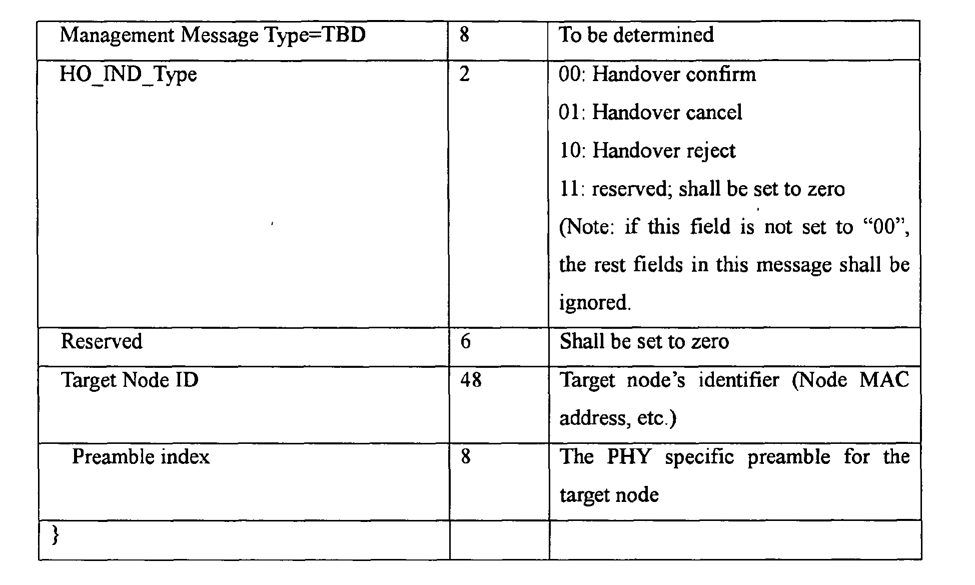

Referring to Table 3, the MOB_HO-IND message includes a plurality of IEs. The IEs contain Management Message Type indicating the type of the transmitted message, HO_IND_Type indicating the type of a handover indication, and the ID and preamble index of the target node. The HO_IND_Type can be set to a handover confirm notice indicating that the MS will perform the handover, a handover cancel notice indicating that the MS will continue to communicate with the serving station, or a handover reject notice indicating that the MS has not detected an appropriate target node and requests again candidate node information to the serving station. If the HO_IND_Type is not set to Handover confirm, the values of the following fields are ignored. The ID of the target node can be its MAC address.

In step 425, the MS performs the handover to the target node through network re-entry.

Meanwhile, if the MS does not determine to perform the handover to the target node in step 421, it determines whether to reject the handover in step 427. If the MS considers that none of the neighbor nodes in the candidate node list are appropriate for the handover, it can request reconfigured candidate node information to the serving station. If determining to reject the handover, the MS sends a MOB_HO-IND message set to Handover reject to the serving station in step 433 and returns to step 419 where it receives a MOB_BSHO-RSP message containing the reconfigured candidate node information.

If the MS determines to cancel the handover rather than to reject it in step 427, it sends a MOB_HO-IND message set to Handover cancel to the serving station in step 429 and continues communications with the serving station in step 431. When communications with the serving station are recovered reliably, the MS can cancel the handover, after which the MS ends the algorithm.

When the MS finds a neighbor node with a stronger signal than the serving station or a threshold for requesting a handover is reached, the MS decides to perform the handover. This handover decision criterion may vary depending on system setting; thus, it is to be understood that any other applicable criterion can also be used.

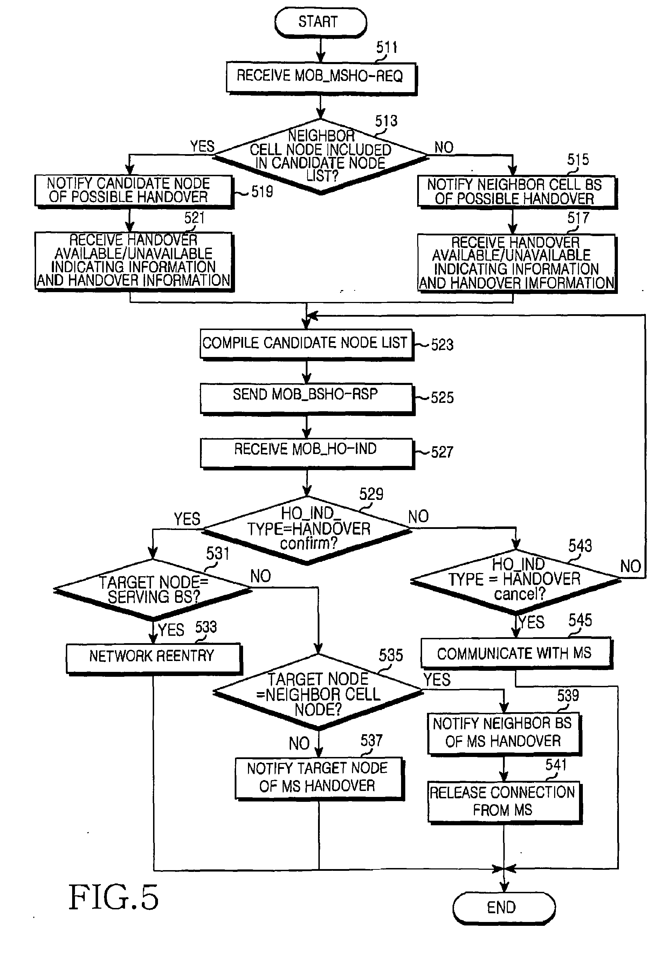

FIG. 5 is a flowchart illustrating an operation of a serving BS, when it receives the handover request from the MS in the multi-hop relay BWA communication system according to the present invention.

Referring to FIG. 5, the serving BS receives the MOB_MSHO-REQ message having the configuration illustrated in Table 1 from the MS in step 511. If the serving BS communicates with the MS via an RS, the MOB_MSHO-REQ message may contain the ID encoding information of the MS illustrated in Table 4.

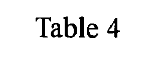

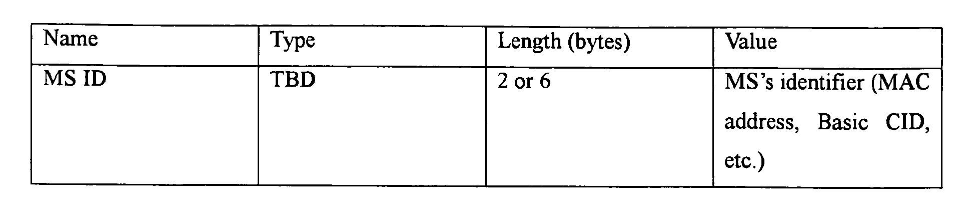

In Table 4, the MS ID encoding information includes an encoding name (MS ID), an encoding type (To Be Determined: TBD), an encoding length (2 or 6 bytes) and an encoding value (Value). The Value is the ID of the MS, such as the basic Connection ID (CID) or MAC address of the MS.

In step 513, the serving BS determines whether the MS-recommended candidate node list in the MOB_MSHO-REQ message includes a neighbor cell node. The neighbor cell node can be a neighbor cell BS or a neighbor cell RS. In the presence of a neighbor cell node in the MOB_MSHO-REQ message, the serving BS sends a HANDOVER REQUEST (HO-request) message to a neighbor cell BS managing the neighbor cell node over a backbone network, notifying the handover request of the MS in step 515.

The HO-request message has the following configuration provided in Table 5.

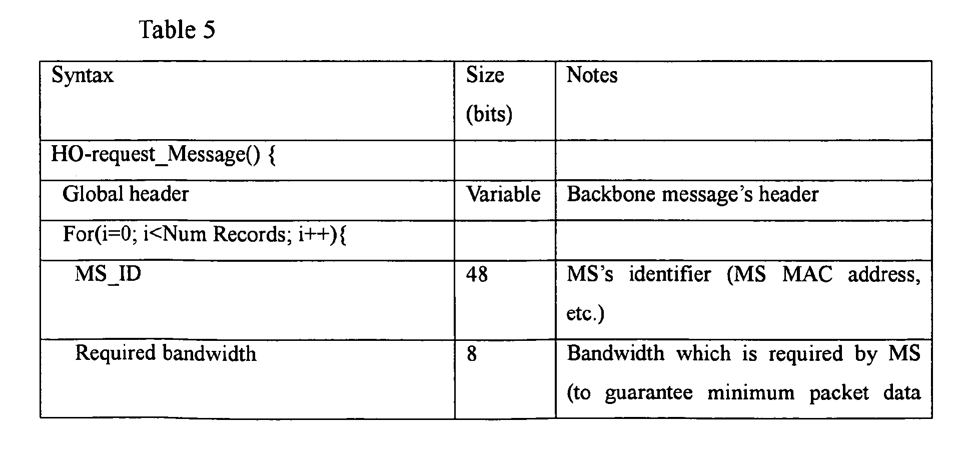

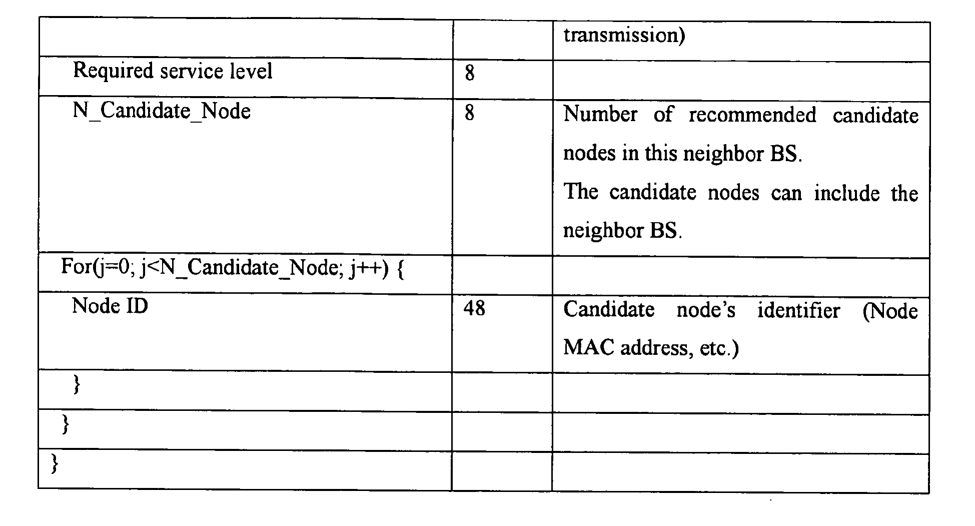

In Table 5, the HO-request message includes a plurality of IEs. The IEs contain Global Header indicating that the transmitted message is a backbone message, the ID of the MS requesting the handover to the neighbor cell node, a bandwidth requested by the MS, a service level that the MS requires when it is handed over to the neighbor cell node, a neighbor node list to which the MS intends to perform the handover, and the IDs of neighbor nodes in the neighbor node list. The ID of the MS or the IDs of the neighbor nodes can be their MAC addresses. The neighbor node list may include the neighbor cell BS receiving the HO-request message from the serving BS, or a neighbor cell RS managed by the neighbor cell BS.

The Global header of a backbone message sent over the backbone network, such as the HO-request message illustrated in Table 5, is configured as illustrated in Table 6.

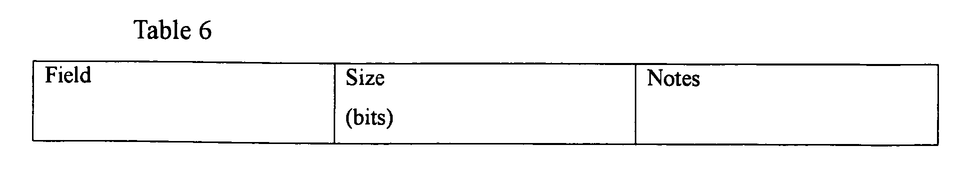

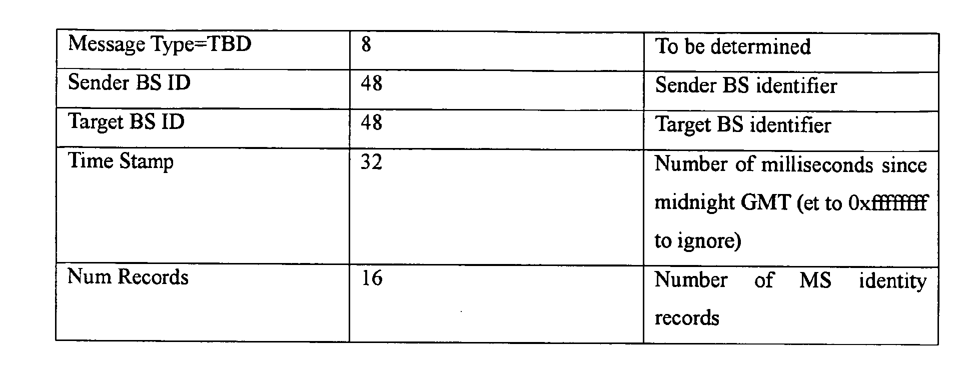

In Table 6, the Global header includes a plurality of IEs, i.e., Message Type indicating the type of the transmitted message, Sender BS ID identifying the BS sending the message, Target BS ID identifying the BS receiving the message, Time Stamp indicating the time stamp of the message, and Num Records indicating the number of the records for each MS included in the message.

The serving BS receives a HANDOVER RESPONSE message (HO-response) message from the neighbor cell BS in step 517 and compiles a candidate node list to be recommended to the MS in step 523.

The HO-response message is configured as illustrated in Table 7.

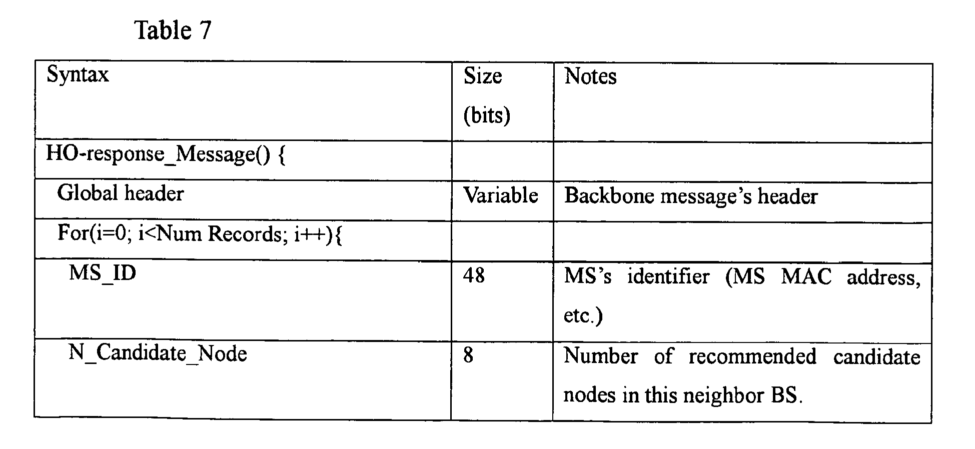

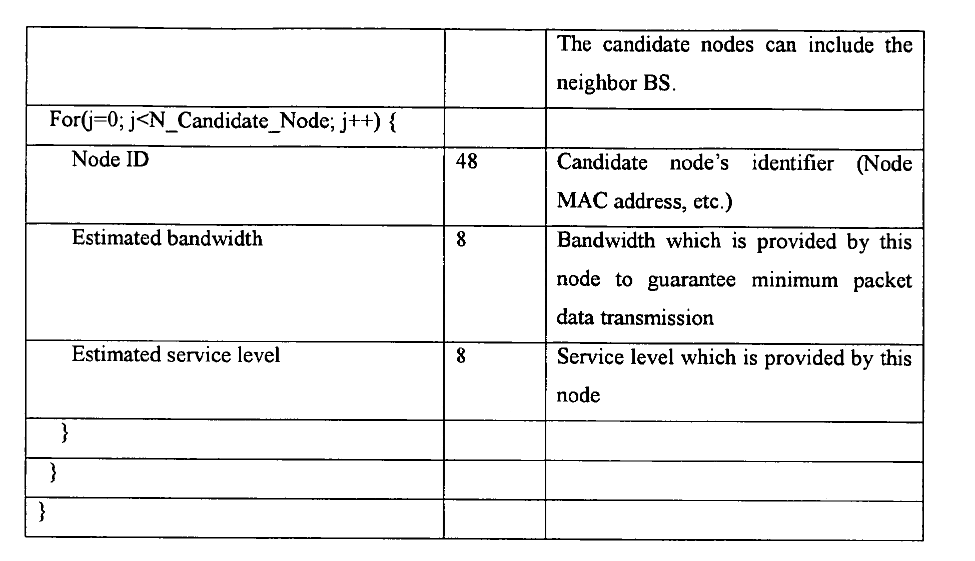

In Table 7, the HO-response message includes a plurality ofIEs. The IEs contain Global Header indicating that the transmitted message is a backbone message, the ID of the MS requesting the handover to the neighbor cell node, a list of neighbor cell nodes to which the MS can be handed over, the IDs of neighbor cell nodes, and bandwidths and service levels that the neighbor cell nodes can provide to the MS. The ID of the MS or the IDs of the neighbor nodes can be their MAC addresses. The neighbor cell node list may include the neighbor cell BS, or a neighbor cell RS managed by the neighbor cell BS.

In the presence of a serving cell node that can be the target BS in the candidate node list set in the MOB_MSHO-REQ message in step 513, the serving BS sends a Mobile Station Handover Inform (MSHO-INFORM) message in order to determine the possibility of the handover to the serving cell node in step 519.

The MSHO-INFORM message has the following configuration illustrated in Table 8.

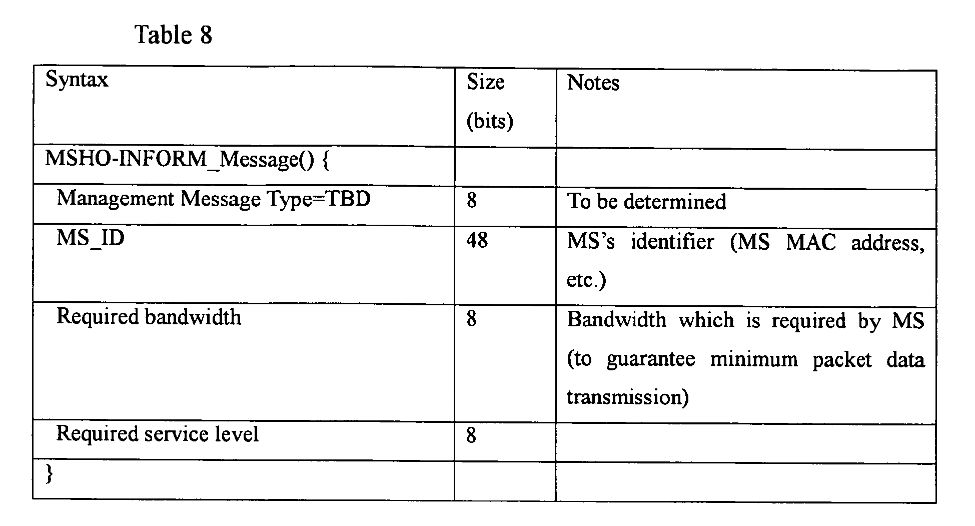

In Table 8, the MSHO-INFORM message includes a plurality ofIEs. The IEs contain Management Message Type indicating the type of the transmitted message, the ID of the MS requesting the handover, the bandwidth requested by the MS, and the service level that the MS requires when it is handed over. The ID of the MS can be its MAC address.

In step 521, the serving BS receives a Mobile Station Handover Inform Acknowledgement (MSHO-INFORM-ACK) message from the serving cell node.

The MSHO-INFORM-ACK message has the following configuration illustrated in Table 9.

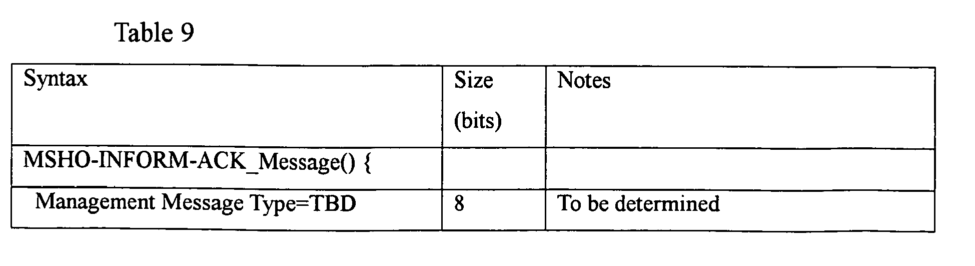

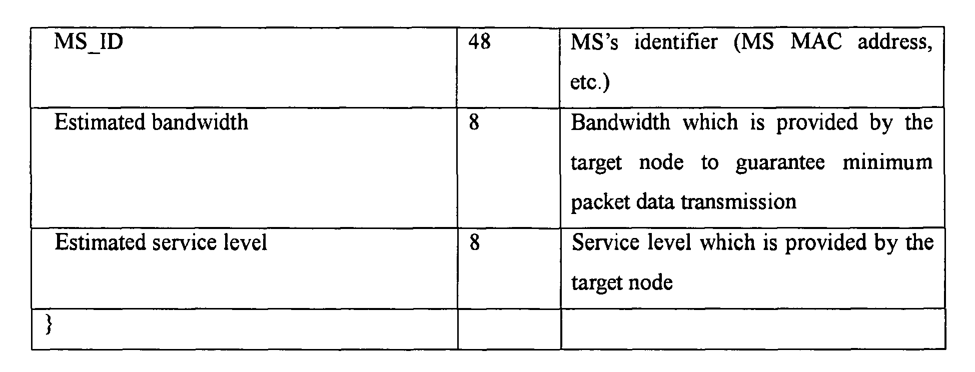

In Table 9, the MSHO-INFORM-ACK message includes a plurality of IEs. The IEs contain Management Message Type indicating the types of the transmitted message, the ID of the MS requesting the handover, and a bandwidth and a service level that the target node can provide to the MS. The ID of the MS can be its MAC address.

In step 523, the serving BS compiles a candidate node list recommended to the MS, referring to the handover information of the neighbor cell node received from the neighbor cell BS in steps 515 and 517, and the handover information of the serving cell node received from the serving cell node in steps 519 and 521. The serving BS then sends the MOB_BSHO-RSP message with the candidate node list, illustrated in Table 2 in step 525. The MOB_BSHO-RSP message is sent to the MS directly or via a serving RS. In the latter case, the MS ID encoding information illustrated in Table 4 is further included in the MOB_BSHO-RSP message.

In step 527, the serving BS receives from the MS the MOB_HO-IND message having the configuration illustrated in Table 3 indicating whether the MS will perform the handover. If the serving BS communicates with the MS via the serving RS, the MOB_HO-IND message may further contain the MS ID encoding information of Table 4.

The serving BS checks HO_IND_Type in the MOB_HO-IND message in step 529. If HO_IND_Type is set to Handover confirm, the serving BS determines whether the target node indicated by the MOB_HO-IND message is the serving BS, considering that the handover will take place in step 531.

If the target node is the serving BS, the serving BS performs network re-entry with the MS in step 533. If the target node is not the serving BS, the serving BS determines whether the target node is the neighbor cell node in step 535.

If the target node is an RS within the serving cell, the serving BS notifies the serving cell RS of the handover of the MS in step 537. The serving BS may send a HANDOVER NOTIFICATION (HO-notify) message to the target node within the serving cell, for the notification.

The HO-notify message has the following configuration illustrated in Table 10.

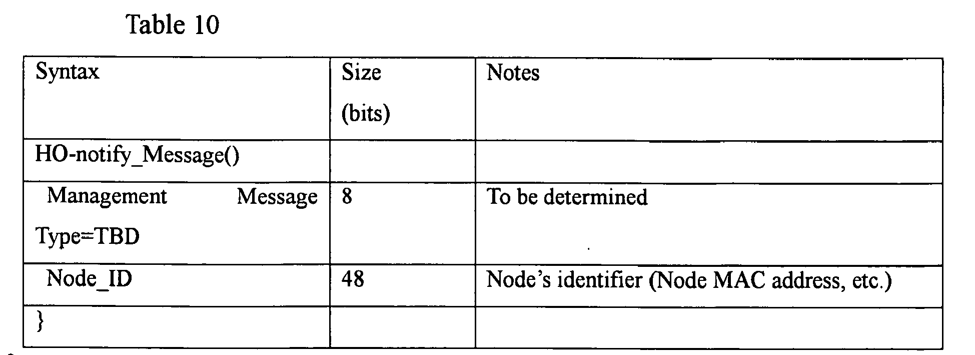

Referring to Table 10, the HO-notify message includes a plurality of IEs. The IEs are Management Message Type indicating the type of the transmitted message and the ID of the MS that will be handed over to the node to receive the message. The HO-notify message may contain the bandwidth and service level that the node provides when the handover is performed.

If the target node is the neighbor cell node in step 535, the serving BS sends to the neighbor cell BS managing the neighbor cell node a HANDOVER CONFIRM (HO-confirm) message over the backbone network, notifying the handover of the MS.

The structure of the HO-notify message is illustrated in Table 11.

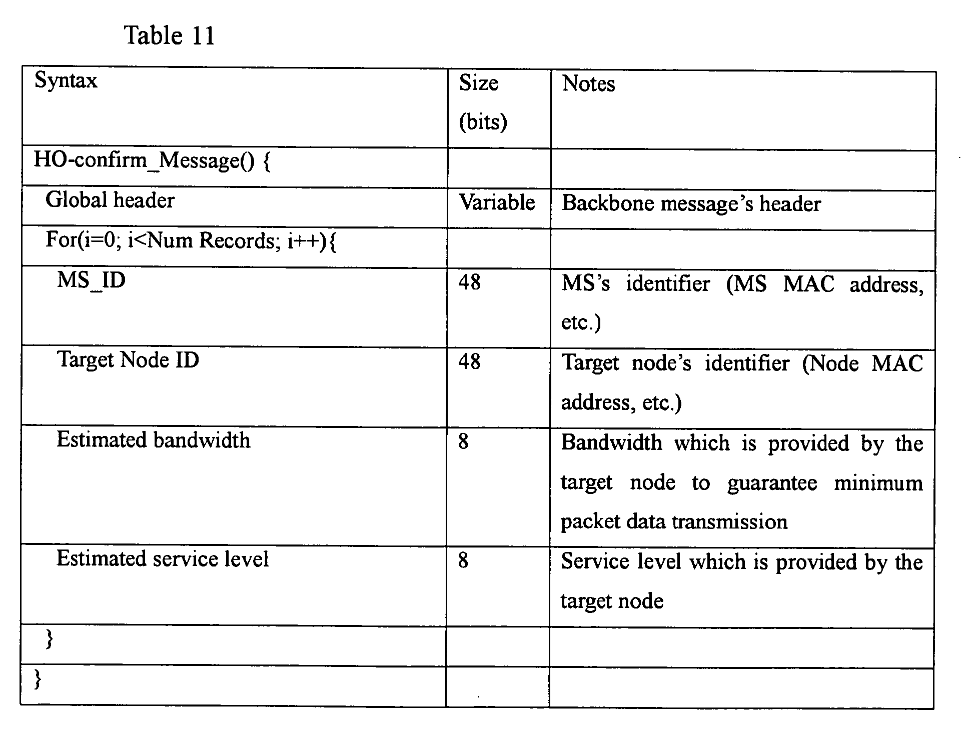

In Table 11, the HO-confirm message includes a plurality of IEs. The IEs contain Global Header indicating that the transmitted message is a backbone message, the ID of the MS to perform the handover, the ID of the target node in the neighbor cell, and the bandwidth and service level that the target node can provide when the MS performs the handover. The target node is the neighbor cell BS or the neighbor cell RS managed by the neighbor cell BS. The bandwidth and service level set in Table 7 is filled in Estimated bandwidth and Estimated service level.

The serving BS releases existing resources from the MS in step 541 and ends the algorithm.

Meanwhile, if HO_IND_Type is not Handover confirm in the MOB_HO-IND message in step 529, the serving BS determines whether HO_IND_Type is Handover cancel in step 543. If HO_IND_Type is set to Handover cancel, the serving BS continues to communicate with the MS directly or via the serving RS, considering that the MS will not perform the handover in step 545. If HO_IND_Type is not set to Handover cancel, which indicates that HO_IND_Type is Handover reject, the serving BS searches for an appropriate node for handover of the MS in step 523.

While the MOB_MSHO-REQ message, the MOB_MSHO-RSP message, and the MOB_HO-IND message are formed by including the MS ID encoding information of Table 4 in the respective structures defmed in Tables 1, 2 and 3, they can also be configured in different structures to include the ID and handover information of the MS.

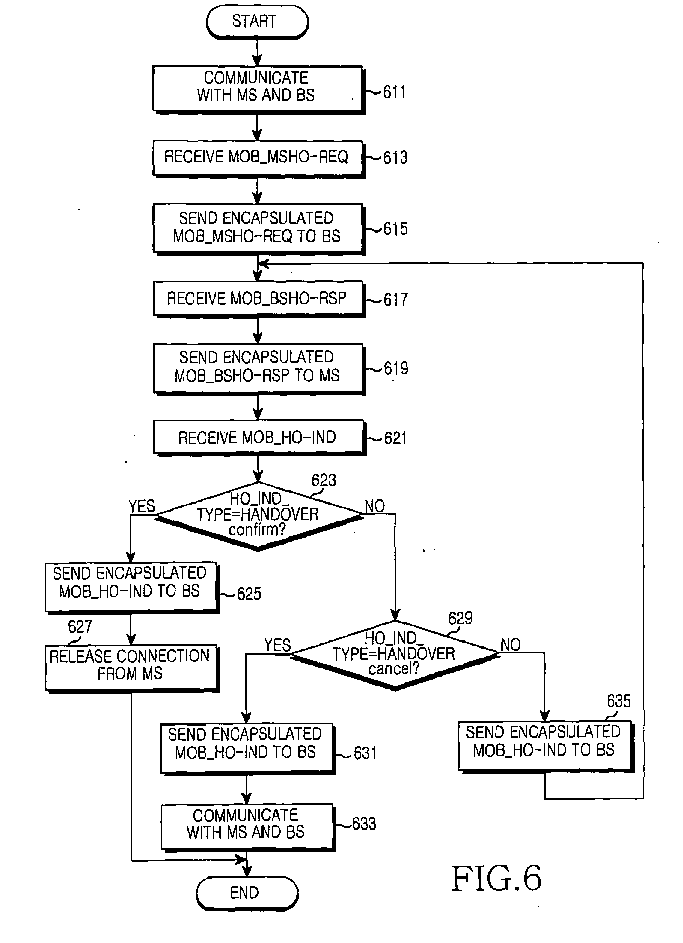

FIG. 6 is a flowchart illustrating an operation of the serving RS, when it receives the handover request from the MS in the multi-hop relay BWA communication system according to the present invention. The serving RS relays the handover request and the handover response between the MS and the BS during the MS-initiated handover procedure.

Referring to FIG. 6, the serving RS communicates with the MS and the serving BS and relays data from the MS to the serving BS in step 611. Upon receipt of the MOB_MSHO-REQ message having the configuration illustrated in Table 1 from the MS in step 613, the serving RS sends the MOB_MSHO-REQ message added with the MS ID encoding information of Table 4 to the serving BS in step 615.

In step 617, the serving RS receives the MOB_BSHO-RSP message illustrated in Table 2 in response to the MOB_MSHO-REQ message from the serving BS. The MOB_BSHO-RSP message contains the MS ID encoding information of Table 4. The serving RS sends to the MS the MOB_BSHO-RSP message from which the MS ID encoding information is eliminated in step 619.

The serving RS receives from the MS the MOB_HO-IND message having the configuration illustrated in Table 3 indicating whether the MS will perform the handover in step 621 and determines HO_IND_Type in the MOB_HO-IND message in step 623. If HO_IND_Type is set to Handover confirm, the serving RS sends the MOB_HO-IND message attached with the MS ID encoding information of Table 4 to the serving BS in step 625 and releases existing resources from the MS, considering that the handover will occur in step 627.

Meanwhile, if HO_IND_Type is not Handover confirm in the MOB_HO-IND message in step 623, the serving RS determines whether HO_IND_Type is Handover cancel in step 629. If HO_IND_Type is set to Handover cancel, the serving RS sends the MOB_HO-IND message added with the MS ID encoding information of Table 4 to the serving BS in step 631 and continues to function as the serving RS for relaying communications between the MS and the serving BS in step 633.

If HO_IND_Type is not set to Handover cancel, which indicates that HO_IND_Type is Handover reject, the serving RS sends the MOB_HO-IND message added with the MS ID encoding information of Table 4 to the serving BS, recognizing that the MS has not detected an appropriate neighbor node for the handover in step 635. The serving RS returns to step 617 and awaits reception of a MOB_BSHO-RSP message containing a reconfigured candidate node list appropriate for the handover of the MS from the serving BS, and ends the algorithm.

While the MOB_MSHO-REQ message, the MOB_MSHO-RSP message and the MOB_HO-IND message are formed by including the MS ID encoding information of Table 4 in the respective structures defmed in Tables 1, 2 and 3, they can also be configured in different structures to include the ID and handover information of the MS.

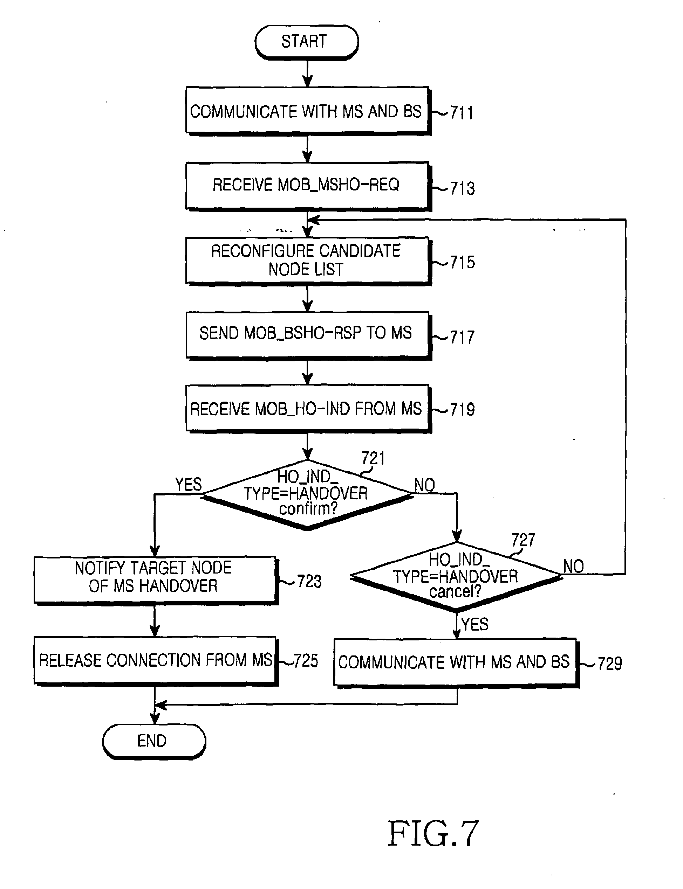

FIG. 7 is a flowchart illustrating an operation of the serving RS, when it receives the handover request from the MS in the multi-hop relay BWA communication system according to the present invention.

Referring to FIG. 7, the serving RS communicates with the MS and the serving BS and relays data from the MS to the serving BS in step 711. The serving RS receives the MOB_MSHO-REQ message having the configuration illustrated in Table 1 from the MS in step 713. The MOB_MSHO-REQ message contains a candidate node list recommended by the MS.

The serving RS reconfigures the candidate node list of the received message in step 715 and sends a MOB_BSHO-RSP message with the reconfigured candidate node list to the MS in step 717.

Upon receipt of the MOB_HO-IND message having the configuration illustrated in Table 3 indicating whether the MS will perform the handover from the MS in step 719, the serving RS determines HO_IND_Type in the MOB_HO-IND message in step 721. If HO_IND_Type is set to Handover confirm, the serving RS notifies a target node indicated by the MOB_HO-IND message of the handover of the MS, considering that the handover to the target node will occur in step 723. For the notification, the serving RS sends the HO-notify message illustrated in Table 10 directly to the target node, or forwards the MOB_HO-IND message to the serving BS so that the serving BS can notify the target node of the handover. In the latter case, the MOB_HO-IND message may contain the MS ID encoding information of Table 4. In step 725, the serving RS releases existing resources from the MS.

Meanwhile, if HO_IND_Type is not Handover confirm in the MOB_HO-IND message in step 721, the serving RS checks whether HO_IND_Type is Handover cancel in step 727. If HO_IND_Type is set to Handover cancel, the serving RS continues to function as the serving RS for relaying communications between the MS and the serving BS in step 729. The serving RS may inform the serving BS of the handover cancellation of the MS, for example, by sending the MOB_HO-IND message attached with the MS ID encoding information of Table 4.

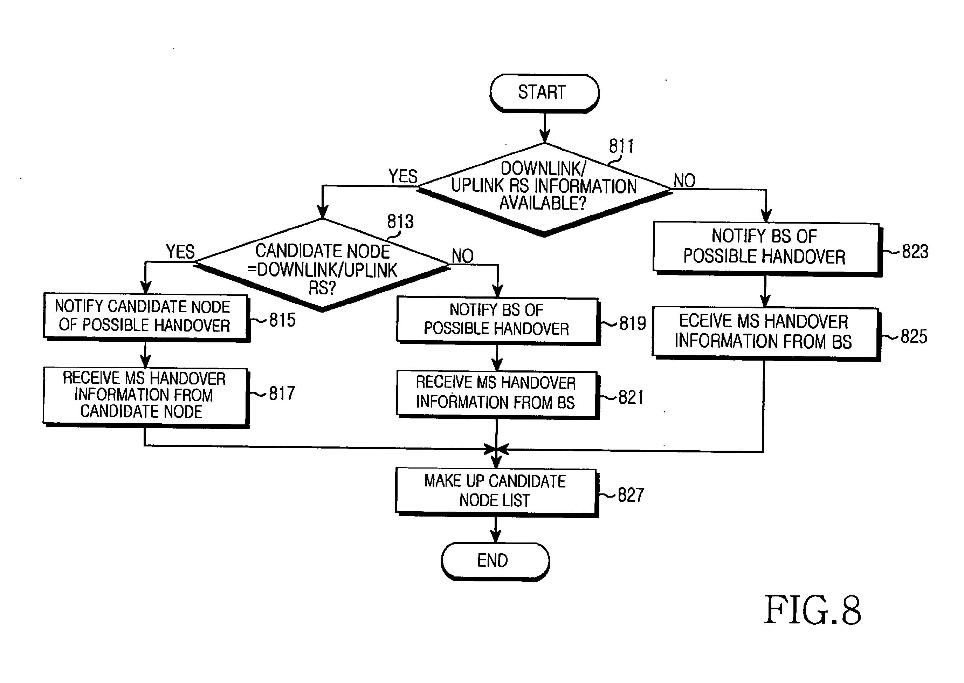

If HO_IND_Type is not set to Handover cancel, which indicates that HO_IND_Type is Handover reject, the serving RS reconfigures a candidate node list for the MS, recognizing that the MS has not detected an appropriate neighbor node for the handover in step 715. The candidate node list may be configured/reconfigured in the procedure illustrated in FIG. 8. Then the serving RS ends the algorithm.

While the MOB_HO-IND message sent from the serving RS to the serving BS to indicate the handover of the MS in step 723 and the MOB_HO-IND message sent from the serving RS to the serving BS to indicate the handover cancellation of the MS in step 729 are formed by including the MS ID encoding information of Table 4 in the structure defmed in Table 3, they can also be configured in a different structure to include the ID and handover information of the MS.

FIG. 8 is a flowchart illustrating an operation of the serving RS for compiling a candidate node list to support the handover for the MS, when it receives the handover request from the MS in the multi-hop relay BWA communication system according to the present invention.

Referring to FIG. 8, upon receipt of a MOB_MSHO-REQ message with an MS-recommended candidate node list from the MS during communicating with the MS and the serving BS, the serving RS determines whether information about downlink and uplink RSs of the serving RS can be acquired in step 811. The downlink RSs are RSs to which the serving RS relays data received from the serving BS, and the uplink RSs relay data received from the serving BS to the serving RS. With knowledge of the downlink/uplink RS information, the serving RS can process data transmission to RSs listed in a downlink/uplink RS list without intervention from the serving BS. Hence, a delay caused as handover control messages pass through the serving station can be reduced.

If the downlink/uplink RS information can be acquired, the serving RS checks the presence or absence of any downlink/uplink RS in the MS-recommended candidate node list set in the MOB_MSHO-REQ message in step 813. In the presence of any downlink/uplink RS in the candidate node list, the serving RS sends the MSHO-INFORM message configured as illustrated in Table 8 to the downlink/uplink RS, notifying that the handover may occur to the downlink/uplink RS in step 815 and receives the MSHO-INFORM-ACK message configured as illustrated in Table 9 as a response from the candidate node (i.e. the downlink/uplink RS) in step 817.

In the presence of a candidate node other than the downlink/uplink RSs in the MS-recommended candidate node list, the serving RS sends a message with the MS-recommended candidate node list to the serving BS in order to request handover information about the candidate node to which the serving RS cannot send data directly in step 819. The message may have the MS-recommended candidate node list without information about downlink/uplink RSs being candidate nodes. Then the serving RS receives the handover information from the serving BS in step 821.

On the other hand, if the downlink/uplink RS information is not available in step 811, the serving RS requests handover information of the candidate nodes of the MS-recommended candidate node list to the serving BS in step 823and receives the handover information from the serving BS in step 825.

To acquire the handover information of the candidate nodes in the MS-recommended candidate node list in steps 819 to 825, the serving RS may send the MOB_MSHO-REQ message received from the MS, added with the MS ID encoding information of Table 4 to the serving BS. Also, the serving BS may reply with a MOB_BSHO-RSP message.

In step 827, the serving RS configures a serving RS-recommended candidate node list based on the information about candidate nodes being downlink/uplink RSs, and the information about other candidate nodes, received from the serving BS. The serving RS then ends the algorithm.

While the serving RS uses the MOB_MSHO-REQ message and the MOB_BSHO-RSP message in acquisition of candidate node information to support the handover of the MS with the aid of the serving BS, the serving RS may use any other available message.

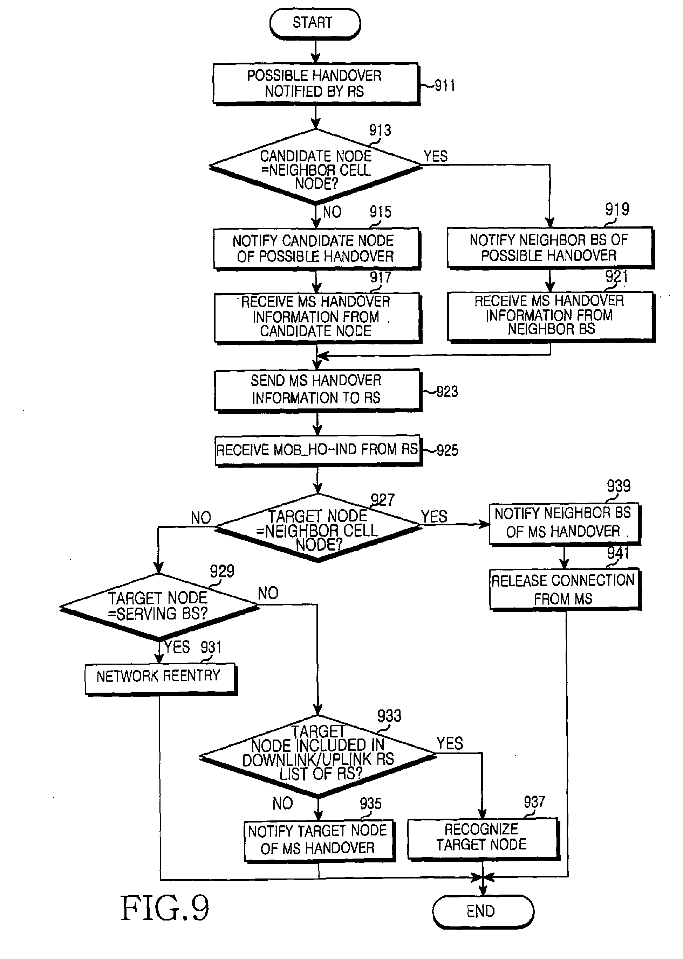

FIG. 9 is a flowchart illustrating an operation of the serving BS, when it receives the handover request from the MS in the multi-hop relay BWA communication system according to the present invention.
Referring to FIG. 9, the serving BS receives a handover control message including candidate node information from the serving RS, as the MS requests a handover in step 911. The handover control message can be the MOB_MSHO-REQ message of Table 1 including the MS ID encoding information of Table 4, or any other message of a different structure including the ID and handover information of the MS. In step 913, the serving BS checks the presence of a neighbor cell node in an MS-recommended candidate node list included in the received message. The neighbor cell node is a neighbor cell BS or a neighbor cell RS.

In the absence of any neighbor cell node in the candidate node list, the serving BS considers that a serving cell node is included in the candidate node list and notifies the candidate node (i.e. the serving cell node) of the possible handover of the MS in step 915 and receives handover information required for the handover from the candidate node in step 917. To acquire the handover information from the candidate node, the serving BS can send the MSHO-INFORM message illustrated in Table 8 and receive the MSHO-INFORM-ACK message illustrated in Table 9.

In the presence of a neighbor cell node in the candidate node list, the serving BS sends the HO-request message of Table 5 to a neighbor cell BS managing the neighbor cell node over a backbone network, notifying of the handover of the MS in step 919 and receives the HO-response message of Table 7 from the neighbor cell BS in step 921.

In step 923, the serving BS sends the handover information of the MS acquired in steps 915 to 921 to the serving RS by the MOB_BSHO-RSP message of Table 2 including the MS ID encoding information of Table 4, or any other message of a different structure including the ID and handover information of the MS.

In step 925, the serving BS receives from the serving RS the MOB_HO-IND message configured as illustrated in Table 3 including the MS ID encoding information, indicating whether the MS will perform the handover. The MOB_HO-IND message may be replaced by any other message of a different structure including the ID and handover information of the MS.

The serving BS determines whether a target node indicated by the MOB_HO-IND message is a neighbor cell node in step 927. If the target node is not a neighbor cell node, the serving BS determines that the target node is a serving cell node and determines whether the serving cell node is the serving BS itself in step 929. If the target node is the serving BS, the serving BS performs network re-entry with the MS in step 931. If the target node is not the serving BS, the serving BS determines whether the target node is any node included in the downlink/uplink RS list of the serving RS in step 933. If the target node is the serving RS not listed in the downlink/uplink RS list, the serving BS sends the HO-notify message illustrated in Table 10 to the target node, thereby notifying the handover of the MS in step 935. If the target node is a downlink/uplink RS of the serving RS, the serving BS recognizes that the MS will perform the handover to the target node in step 937. The serving BS already has knowledge of the downlink/uplink RSs of the serving RS and considers that the downlink/uplink RS set as the target node has already received the HO-notify message of Table 10 from the serving RS. Thus, the serving BS does not perform any additional operation in step 937. However, it is assumed that the serving RS cannot directly send the HO-notify message to the target node in the downlink/uplink RS list, but the serving BS should send the HO-notify message to the target node.

If the target node is the neighbor cell node in step 927, the serving BS sends the HO-confirm message of Table 11 to the neighbor cell BS managing the neighbor cell node over the backbone network in order to indicate the handover of the MS in step 939. The neighbor cell node is the neighbor cell BS or the neighbor cell RS. Then the serving BS releases existing resources from the MS in step 941 and ends the algorithm.

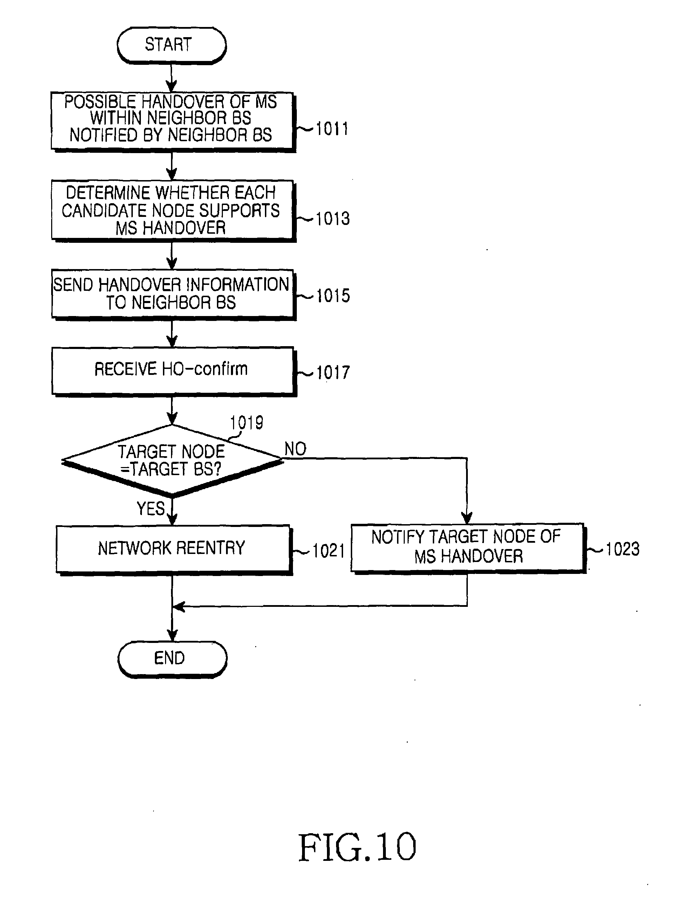

FIG. 10 is a flowchart illustrating an operation of the neighbor cell BS, when it receives the MS's handover request in the multi-hop relay BWA communication system according to the present invention.

Referring to FIG. 10, upon receipt of the HO-request message of Table 5 from its neighbor cell BS (i.e. the serving BS of the MS), the BS (i.e. the neighbor cell BS) recognizes that the MS requests a handover to a node that it manages in step 1011. In step 1013, the BS determines whether the handover to the node can be supported, based on the received message. The determination can be made based on the values of Requested bandwidth and Requested service level set in the HO-request message, or according to a criterion set by the BS.

The BS replies to the neighbor cell BS managing the MS with the HO-response message illustrated in Table 7 in step 1015. The HO-response message includes information about a bandwidth and a service level that the node supports for the MS, and information to be referred to when the MS decides on a target node.

Upon receipt of the HO-confirm message illustrated in Table 11 from the neighbor cell BS in step 1017, the BS recognizes that the handover to the node will occur. In step 1019, the BS determines whether the target node indicated by the HO-confirm message is the BS itself. If the target node is the BS, the BS performs network re-entry with the MS in step 1021. If the target node is an RS managed by the BS, the BS sends the HO-notify message illustrated in Table 10 to the RS, indicating the handover of the MS in step 1023. The BS then ends the algorithm.

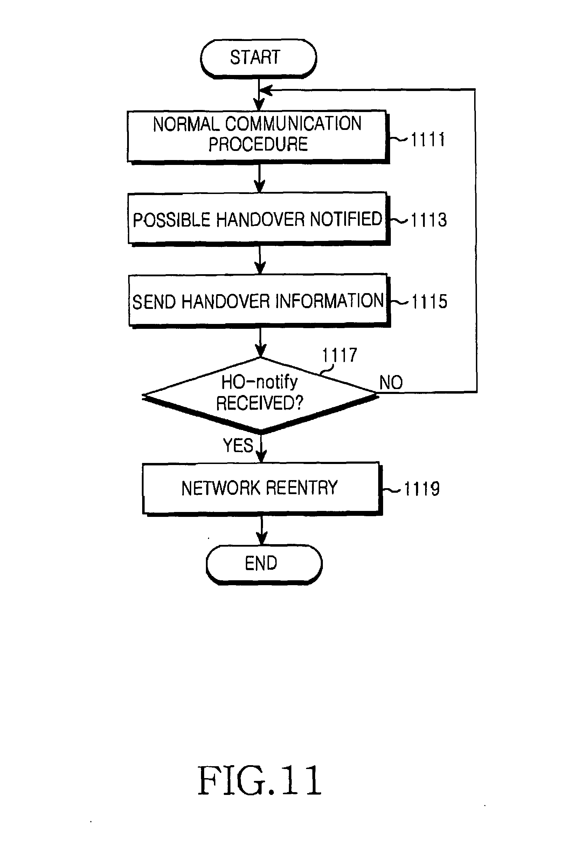

FIG. 11 is a flowchart illustrating an operation of the neighbor RS, when it receives the MS's handover request in the multi-hop relay BWA communication system according to the present invention.

Referring to FIG. 11, the RS performs a normal communication procedure in step 1111 and receives a message indicating a possible handover of the MS from its serving station in step 1113. If the RS communicates with a BS directly, the serving BS is the serving station. If the RS communicates with the serving BS via another RS, this serving RS is the serving station. The received message can be the MSHO-INFORM message illustrated in Table 8 and the node that sends the MSHO-INFORM message can be the serving BS or the serving RS of the MS.

The RS then determines whether to support the handover based on information included in the received message. In step 1115, the RS replies with a message including handover information of the MS. The handover information of the MS can be utilized in compiling a candidate node list by the serving BS or serving RS of the MS and the response message can be the MSHO-INFORM-ACK message of Table 9.

The RS monitors reception of the HO-notify message of Table 10 indicating that the MS will perform the handover in step 1117. If the RS does not receive the HO-notify message, it returns to step 1111. Upon receipt of the HO-notify message, the RS performs network re-entry with the MS in step 1119. Thus, the RS becomes the serving station of the MS. The RS then ends the algorithm.

With reference to FIGs. 7 to 11, if the RS is able to communicate directly with all RSs under the control of the same serving BS besides the downlink/uplink nodes, it can send/receive the MSHO-INFORM message, the MSHO-INFORM-ACK, or the HO-notify message to/from the RSs. Also, if the RS is able to communicate directly with RSs under the control of a neighbor BS besides the RSs under the control of the same serving BS, it can send/receive the MSHO-INFORM message, the MSHO-INFORM-ACK, or the HO-notify message to/from the RSs.

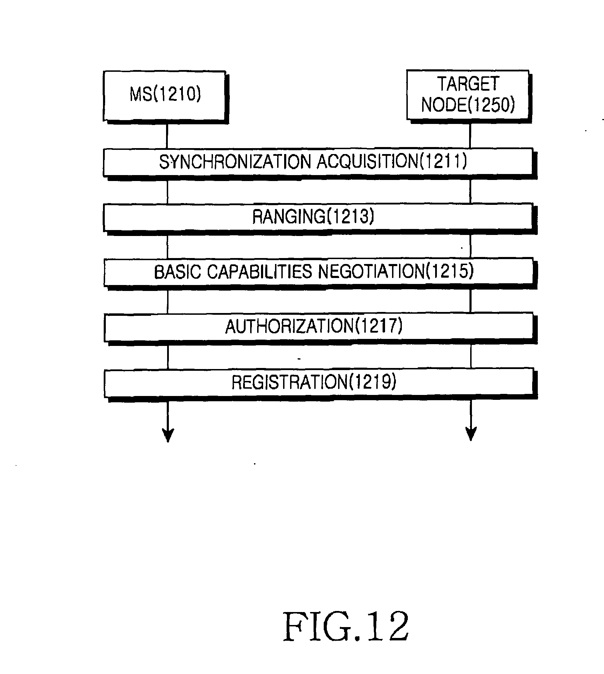

FIG. 12 is a diagram illustrating a signal flow for network re-entry between the MS and the target node in the multi-hop relay BWA communication system according to the present invention.

Referring to FIG. 12, an MS 1210 acquires synchronization with a target node 1250 by receiving a preamble from the target node 1250 in step 1211. In step 1213, the MS 1210 acquires ranging information by receiving a Downlink Channel Descriptor (DCD), an Uplink Channel Descriptor (UCD), a Downlink-MAP (DL-MAP), and an Uplink-MAP (UL-MAP) from the target node 1250 and performs ranging. The UCD includes a handover ranging code set allocated to the handover MS. The ranging with the target node 1250 is initiated by selecting one code from the handover ranging code set and sending the selected handover ranging code to the target node 1250 in a ranging opportunity interval. When the target node 1250 recognizes the handover of the MS by receiving the MOB_HO-IND message of Table 3, the HO-notify message of Table 10 or the HO-confirm message of Table 11, it allocates an uplink ranging opportunity interval to the MS, and the MS sends a ranging request message or a ranging code in the allocated ranging opportunity interval. Thus, the ranging with the target node 1250 starts.

The MS 1210 negotiates basic capabilities with the target node 1250 in step 1215 and performs an authorization procedure with the target node 1250 in step 1217. If the target node 1250 is an RS, the MS 1210 may have to communicate with a BS managing the RS, for the authorization.

If the target node 1250 is not a serving cell node, the MS 1210 registers to the target node 1250 after the handover in step 1219. If the target node 1250 is a serving cell node, that is, if the handover takes place between serving cell RSs, from a serving cell RS to a serving BS, or from the serving BS to the serving cell RS, the MS 1210 has already been registered to the serving BS. Therefore, the MS 1210 may perform part of the registration procedure needed to continue communications, such as CID update, without the entire registration procedure that is performed during an initial connection procedure. If the MS 1210 moves from a serving cell to a neighbor cell by handover, it has to perform the registration procedure with the target node 1250 as done during the initial connection procedure. If the target node 1250 is not a neighbor cell BS, the neighbor cell BS can intervene in the registration procedure. After the network re-entry for communication continuity after the handover, the MS 1210 and the target node 1250 perform a normal communication procedure.

Next, a description will be made of the configurations of the MS, the RS and the BS according to the present invention. Since the MS, the RS and the BS have identical interface modules (communication modules), their operations will be described only once.

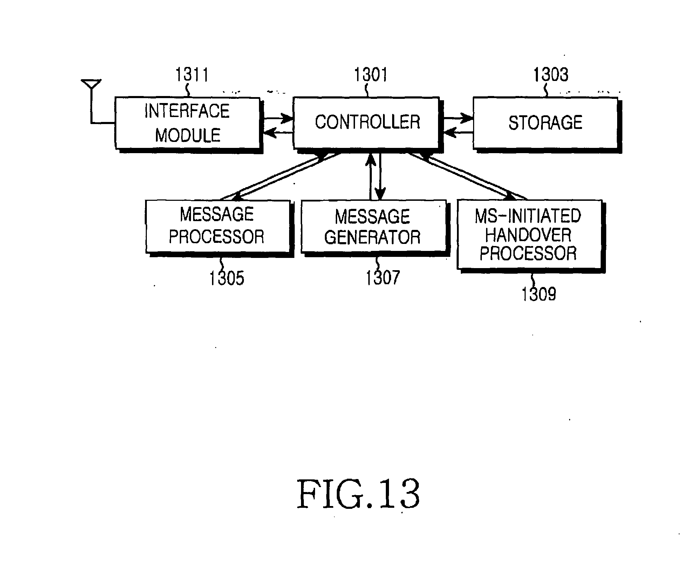

FIG. 13 is a block diagram of the MS (or the RS or BS) according to the present invention. The following description will be made mainly in the context of processing control messages.

Referring to FIG. 13, as to the MS, a controller 1301 provides overall control to the MS. For example, the controller 1301 processes and controls voice communication and data communication. In addition to the typical functionalities, the controller 1301 provides a control message received from the RS or the BS to a message processor 1305 and provides a transmission message for the RS or the BS received from a message generator 1307 to an interface module 1311.

A storage 1303 stores programs for controlling the overall operation of the MS and temporary data generated during execution of the programs. That is, the storage 1303 can store data and control information that the MS will send to the RS or the BS.

The message processor 1305 disassembles the control message received from the RS or the BS and notifies the controller 1301 of the disassembly result. Upon receipt of the MOB_BSHO-RSP message illustrated in Table 2, the message processor 1305 extracts control information from the message and provides the control information to the controller 1301. The controller 1301 then controls an MS-initiated handover processor 1309 in accordance with the control information.

The message generator 1307 generates a message to be sent to the RS or the BS under the control of the controller 1301 and provides the message to the interface module 1311 through the controller 1301. The message can be the MOB_MSHO-REQ message illustrated in Table 1 or the MOB_HO-IND message illustrated in Table 3.

The MS-initiated handover processor 1309 provides information required for performing communication procedures for handover of the MS to the controller 1301. The communication procedures include operations for deciding whether to request a handover, collecting candidate node information for the handover, processing handover information received from the BS or the RS, finally determining whether to perform the handover, and selecting a final target node.

The interface module 1311 is used to communicate with the RS or the BS, including a Radio Frequency (RF) processor and a baseband processor. The RF processor downconverts a signal received through an antenna to a baseband signal and provides the baseband signal to the baseband processor. For transmission, the RF processor upconverts a baseband signal received from the baseband processor to an RF signal and sends the RF signal in the air through the antenna. If a BWA scheme is used, the baseband processor Fast Fourier Transform (FFT)-processes the signal received from the RF processor, channel-decodes the FFT signal and provides the resulting original information data (traffic or a control message) to the controller 1301. For transmission, the baseband processor channel-encodes and Inverse Fast Fourier Transform (IFFT)-processes data received from the controller 1301 and provides the IFFT signal to the RF processor.

As to the RS, the controller 1301 provides overall control of the RS. For example, the controller 1301 processes and controls voice communication and data communication. In addition to the typical functions, the controller 1301 operates in relation to processing information about an MS-initiated handover. The controller 1301 provides a control message received from the MS, the BS or another RS to the message processor 1305 and provides a transmission message for the MS, the BS or another RS received from the message generator 1307 to the interface module 1311.

The storage 1303 stores programs for controlling the overall operation of the RS and temporary data generated during execution of the programs. That is, the storage 1303 can store data and control information that the RS will send to the MS, the BS or another RS.

The message processor 1305 disassembles the control message received from the MS, the BS or another RS and notifies the controller 1301 of the disassembly result. Upon receipt of any of the MOB_MSHO-REQ message illustrated in Table 1, the MOB_HO-IND message illustrated in Table 3 from the MS, the MOB_BSHO-RSP message illustrated in Table 2, the MSHO-INFORM message illustrated in Table 8, the MSHO-INFORM-ACK message illustrated in Table 9, the HO-notify message illustrated in Table 10, the MSHO-notify message or the MOB_HO-CMD message illustrated in Table 12 from the BS, the MSHO-INFORM message in Table 8, the MSHO-INFORM-ACK message illustrated in Table 9, or the HO-notify message illustrated in Table 10 from another RS, the message processor 1305 extracts control information from the message and provides the control information to the controller 1301. The controller 1301 then operates in accordance with the control information.

Under the control of the controller 1301, the message generator 1307 generates any of the MOB_BSHO-RSP message for the MS, the MOB_MSHO-REQ message or the MOB_HO-IND message for the BS, the MSHO-INFORM message, the MSHO-INFORM-ACK message, or the HO-notify message for another RS. The generated message is provided to the interface module 1311 through the controller 1301.

Under the control of the controller 1301, the MS-initiated handover processor 1309 performs one of operations for recognizing a handover request from the MS, detecting MS-recommended candidate node information, notifying the BS or another RS of the MS's handover request, configuring appropriate candidate node information of the handover of the MS, recognizing a response for the handover request from the BS or another RS, and determining whether the MS will perform the handover.

The interface module 1311 is accustomed to communicating with the MS, the BS or another RS, including the RF processor and the baseband processor. The RF processor downconverts a signal received through an antenna to a baseband signal and provides the baseband signal to the baseband processor. For transmission, the RF processor upconverts a baseband signal received from the baseband processor to an RF signal and sends the RF signal in the air through the antenna. If a BWA scheme is used, the baseband processor FFT-processes the signal received from the RF processor, channel-decodes the FFT signal, and provides the resulting original information data (traffic or a control message) to the controller 1301. For transmission, the baseband processor channel-encodes and IFFT-processes data received from the controller 1301 and provides the IFFT signal to the RF processor.

As to the BS, the controller 1301 provides overall control of the BS. For example, the controller 1301 processes and controls voice communication and data communication. In addition to the typical functions, the controller 1301 operates in relation to processing information about an MS-initiated handover. The controller 1301 provides a control message received from the MS, the RS or another BS to the message processor 1305 and provides a transmission message for the MS, the RS or another BS received from the message generator 1307 to the interface module 1311.

The storage 1303 stores programs for controlling the overall operation of the BS and temporary data generated during execution of the programs. That is, the storage 1303 can store data and control information that the RS will send to the MS, the RS or another BS.

The message processor 1305 disassembles the control message received from the MS, the RS, or another BS and notifies the controller 1301 of the disassembly result. Upon receipt of any of the MOB_MSHO-REQ message illustrated in Table 1 or the MOB_HO-IND message illustrated in Table 3 from the MS, the MOB_MSHO-REQ message, the MOB_HO-IND message, the MSHO-INFORM-ACK message illustrated in Table 9 from the RS, the HO-request message illustrated in Table 5, the HO-response message illustrated in Table 7, or the HO-confirm message illustrated in Table 11 from another BS, the message processor 1305 extracts control information from the message and provides the control information to the controller 1301. The controller 1301 then operates in accordance with the control information.

Under the control of the controller 1301, the message generator 1307 generates a message to be sent to the MS, the RS or another BS. The message can be the MOB_BSHO-RSP message for the MS, the MOB_BSHO-RSP message, the MSHO-INFORM message, the HO-notify message, the MSHO-notify message or the MOB_HO-CMD message for the RS, the HO-request message, the HO-response message, or the HO-confirm message for another BS. The generated message is provided to the interface module 1311 through the controller 1301.

Under the control of the controller 1301, the MS-initiated handover processor 1309 performs any of operations for identifying the MS requesting a handover, detecting MS-recommended candidate node information, notifying a neighbor cell BS of the MS's handover request, collecting an appropriate candidate node list among neighbor cell BSs and serving cell nodes and determining a target node for the handover of the MS.

The interface module 1311 is accustomed to communicating with the MS, the RS or another BS, including the RF processor and the baseband processor. The RF processor downconverts a signal received through an antenna to a baseband signal and provides the baseband signal to the baseband processor. For transmission, the RF processor upconverts a baseband signal received from the baseband processor to an RF signal and sends the RF signal in the air through the antenna. If a BWA scheme is used, the baseband processor FFT-processes the signal received from the RF processor, channel-decodes the FFT signal, and provides the resulting original information data (traffic or a control message) to the controller 1301. For transmission, the baseband processor channel-encodes and IFFT-processes data received from the controller 1301 and provides the IFFT signal to the RF processor.

The controller 1301 can perform the functions of the message processor 1305, the message generator 1307 and the MS-initiated handover processor 1309. While the message processor 1305, the message generator 1307, and the MS-initiated handover processor 1309 are shown separately in FIG. 13 for illustrative purposes, all or part of their functions may be consolidated into the controller 1301 in implementation.

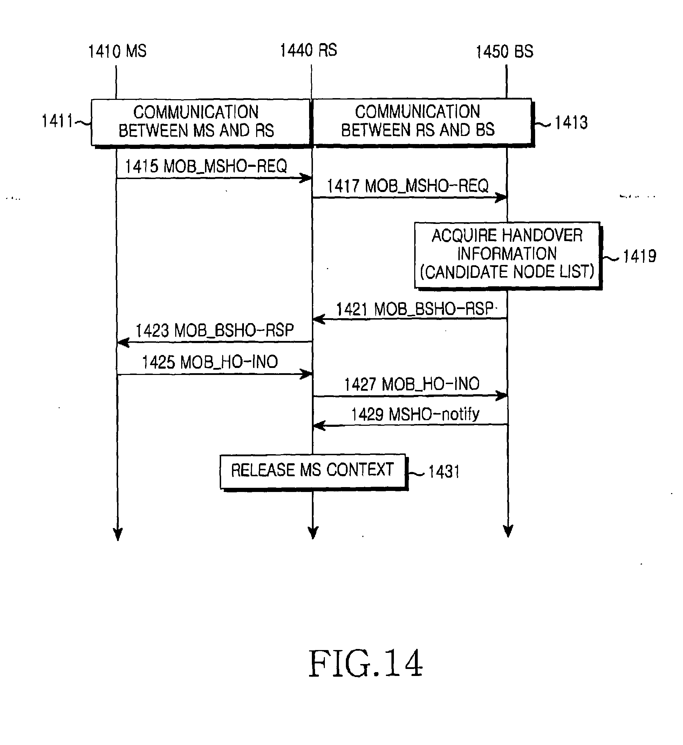

FIG. 14 is a diagram illustrating a signal flow for a handover involving an RS that forwards handover control information for the MS in the multi-hop relay BWA communication system according to the present invention.

Referring to FIG. 14, an MS 1410 communicates with an RS 1440 in step 1411, and the RS 1440 communicates with a BS 1450 in step 1413. The RS 1440 is a serving station for the MS 1410, which relays control messages and data between the MS 1410 and the BS 1450 by forwarding them.

In step 1415, the MS 1410 sends the MOB_MSHO-REQ message to the RS 1440, requesting a handover. The MOB_MSHO-REQ message may contain the information illustrated in Table 1. The RS 1440 forwards the MOB_MSHO-REQ message to the BS 1450 in step 1417. The BS 1450 acquires handover information, for example, candidate node information from the message in step 1419 and replies to the RS 1440 with the MOB_BSHO-RSP message in step 1421. The RS 1440 forwards the MOB_BSHO-RSP message to the MS 1410. The MOB_BSHO-RSP message may contain the information illustrated in Table 2.

In step 1425, the MS 1410 sends the MOB_HO-IND message set to Handover confirm, Handover cancel or Handover reject to the RS 1440. The RS 1440 forwards the MOB_HO-IND message to the BS 1450 in step 1427. The BS 1450 determines whether the MS 1410 will perform the handover based on the received message. If the MS 1410 confirms the handover from the RS 1440 to a target node, the BS 1450 sends the MSHO-notify message to the RS 1440 in step 1429. The MSHO-notify message may include the ID and handover information of the MS 1410. Recognizing the handover of the MS, the RS 1440 releases an MS context that has been maintained for communications with the MS 1410 in step 1431.

As described above, upon receipt of a handover request from the MS communicating with the BS by a relay service of the RS, the BS can send information required for the handover of the MS to the MS via the RS by the MOB_BSHO-RSP message illustrated in Table 2.

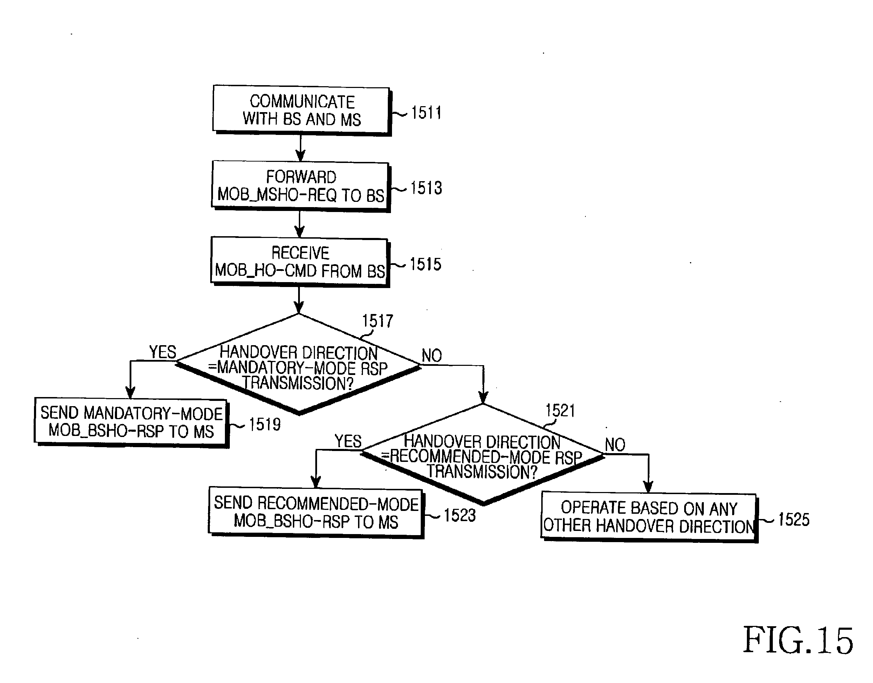

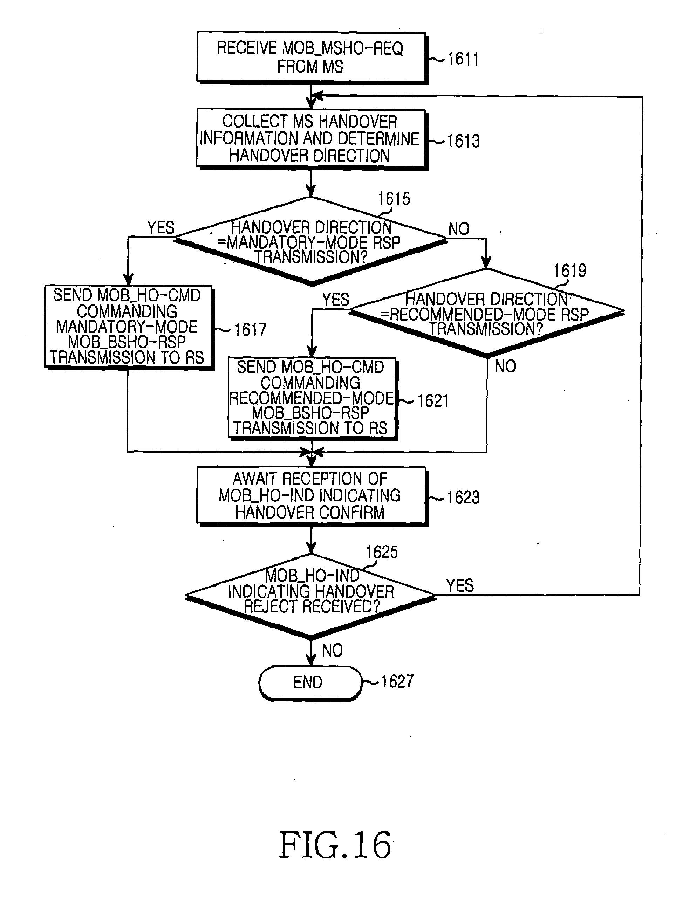

Alternatively, after collecting handover information, for example, about neighbor BSs or RSs that can be candidate nodes for the handover of the MS, the BS may provide the handover information to the RS communicating directly with the MS, commanding the RS to construct and send the MOB_BSHO-RSP message illustrated in Table 2 to the MS. With reference to FIGs. 15 and 16, a description will be made of an operation for the BS to command the RS to send a response message for the handover request to the MS and an operation of the RS when it receives the command from the BS.

FIG. 15 is a flowchart illustrating an operation in the serving RS for processing a command associated with support of an MS-initiated handover, received from the serving BS in the multi-hop relay BWA communication system according to the present invention.

Referring to FIG. 15, the RS relays signals between the BS and the MS that cannot communicate directly with the BS in step 1511. In step 1513, the RS receives the MOB_MSHO-REQ message of Table 1 requesting a handover from the MS and forwards it to the BS. In step 1515, the RS receives from the BS a Mobile Handover Command (MOB_HO-CMD) message commanding the RS to reply to the MS with the MOB_BSHO-RSP message of Table 2.

The MOB_HO-CMD message has the following configuration.

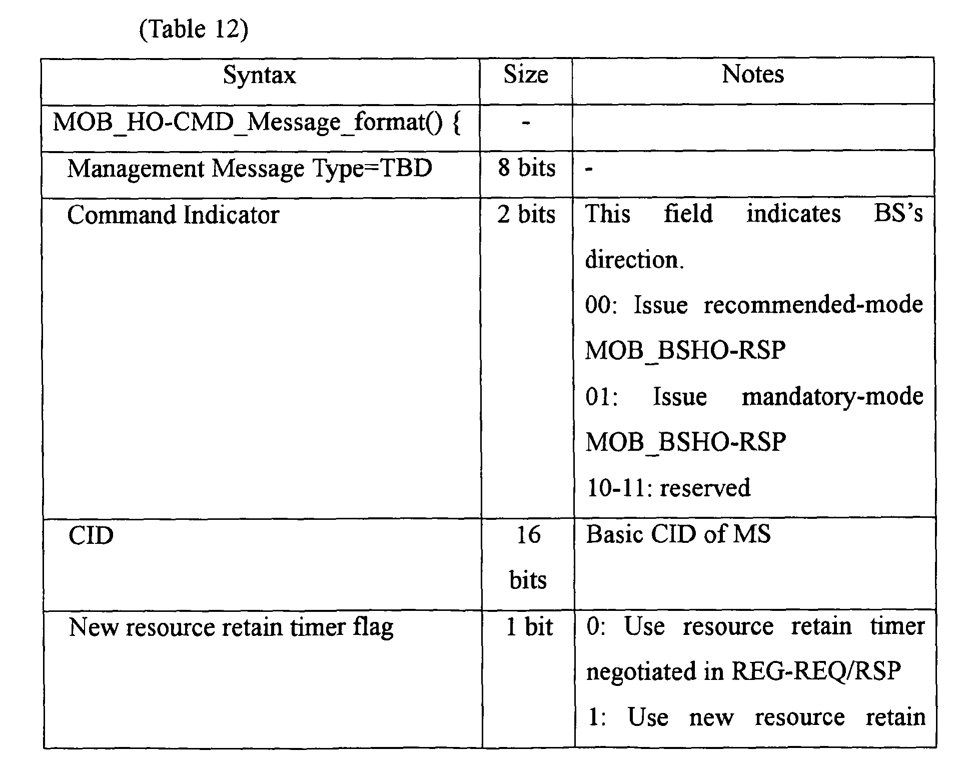

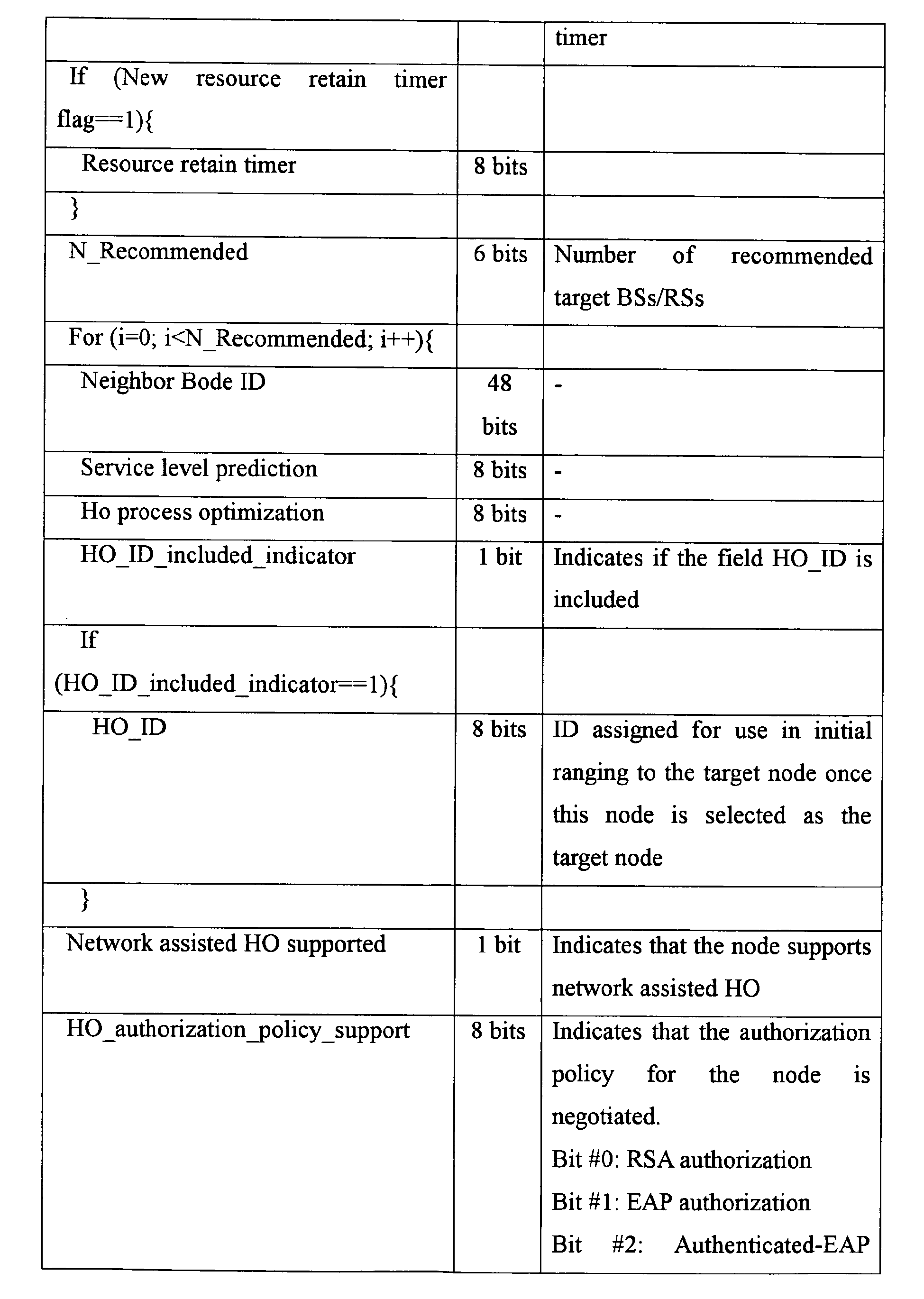

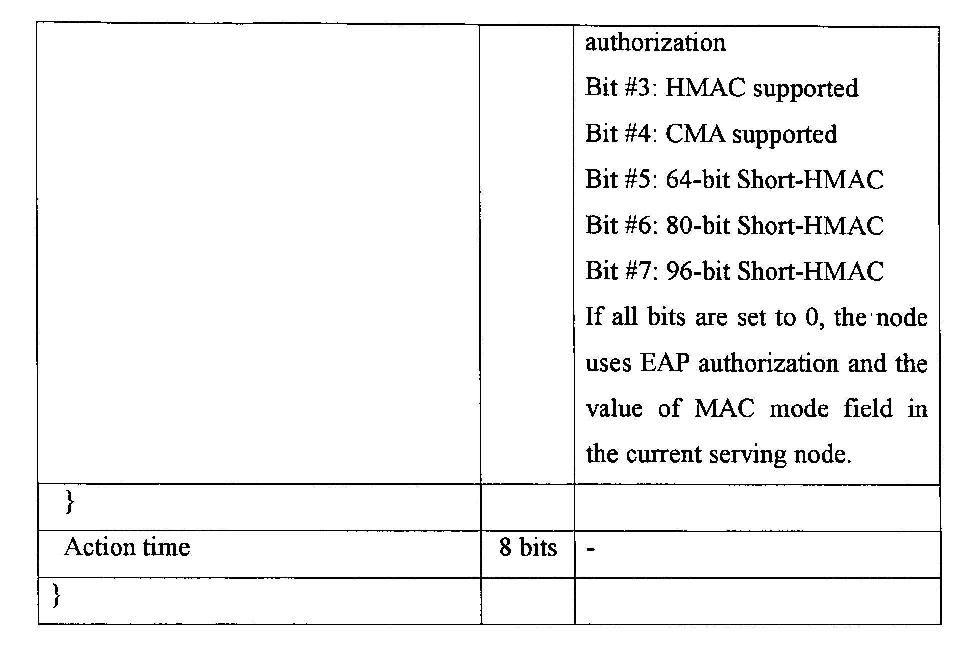

Referring to Table 12, the MOB_HO-CMD message includes a plurality of IEs. The IEs contain Management Message Type indicating the type of the transmitted message, Command indicator indicating the BS's direction for the handover of the MS, CID identifying the MS to receive the MOB_BSHO-RSP message, and information associated with the MS handover. The Command indicator indicates recommended-mode MOB_BSHO-RSP transmission to the MS or mandatory-mode MOB_BSHO-RSP transmission to the MS. The MS handover information includes Neighbor Node ID identifying a neighbor RS or a neighbor BS as a candidate node to be included in the MOB_BSHO-RSP message, Service level prediction indicating a service level that the candidate node can support when the MS performs a handover to the candidate node, HO_ID indicating a handover ID for use in network reentry to the candidate node, and HO process optimization providing optimized handover information supported by the candidate node.

In step 1517, the RS determines from the MOB_HO-CMD message whether the BS's direction for the MS handover is to issue a mandatory-mode MOB_BSHO-RSP message. In the case of issuing a mandatory-mode MOB_BSHO-RSP message, the RS constructs the mandatory-mode MOB_BSHO-RSP message based on the MS handover information acquired from the MOB_HO-CMD message and sends it to the MS in step 1519.

If the BS's direction for the MS handover is not to issue a mandatory-mode MOB_BSHO-RSP message, the RS determines whether the BS's direction for the MS handover is to issue a recommended-mode MOB_BSHO-RSP message in step 1521. In the case of issuing a recommended-mode MOB_BSHO-RSP message, the RS constructs the recommended-mode MOB_BSHO-RSP message based on the MS handover information and sends it to the MS in step 1523. If the BS's direction for the MS handover is not to issue a recommended-mode MOB_BSHO-RSP message either, the RS operates according to any other BS's direction for the MS handover indicated by the MOB_HO-CMD message in step 1525.

FIG. 16 is a flowchart illustrating an operation in the serving BS for commanding the serving RS to support the MS-initiated handover in the multi-hop relay BWA communication system according to the present invention.

Referring to FIG. 16, the BS receives the forwarded MOB_MSHO-REQ message of Table 1 from the RS in step 1611. In step 1613, the BS collects MS handover information and determines a direction for the MS handover. The MS handover information is to be included as handover support information of neighbor RSs or neighbor BSs in the MOB_BSHO-RSP message of Table 2. The MS handover information is acquired by exchanging the HO-request message of Table 5 and the MSHO-INFORM message of Table 8 with the HO-response message of Table 7 and the MSHO-INFORM-ACK message of Table 9. The BS's direction for the MS handover is mandatory-mode MOB_BSHO-RSP transmission or recommended-mode MOB_BSHO-RSP transmission.

In step 1615, the BS determines whether its direction for the MS handover is mandatory-mode MOB_BSHO-RSP transmission. In the case of the mandatory-mode MOB_BSHO-RSP transmission, the BS sends a MON_HO-CMD message commanding the mandatory-mode MOB_BSHO-RSP transmission to the RS in step 1617 and awaits reception of the MOB_HO-IND message of Table 3 indicating that the MS will perform the handover in step 1623.

On the contrary, if the BS's direction is not the mandatory-mode MOB_BSHO-RSP transmission, the BS determines whether the BS's direction is the recommended-mode MOB_BSHO-RSP transmission in step 1619. In the case of the recommended-mode MOB_BSHO-RSP transmission, the BS sends a MON_HO-CMD message commanding the recommended-mode MOB_BSHO-RSP transmission to the RS in step 1621 and proceeds to step 1623. If the BS's direction is not the recommended-mode MOB_BSHO-RSP transmission either, the BS jumps to step 1623.

In step 1625, the BS monitors reception of the MOB_HO-IND message of Table 3 indicating handover reject. Upon receipt of the MOB_HO-IND message indicating handover reject, the BS returns to step 1613. In step 1613, the BS reconfigures the candidate node list and determines its direction for the MS handover in order to command the RS to send the MOB_BSHO-RSP message including the reconfigured candidate node list to the MS. Then the BS operates according to its direction in steps 1615 to 1623. On the other hand, if the BS has not received the MOB_HO-IND message indicating handover reject, the BS ends the procedure for commanding transmission of a handover response for the handover request of the MS according to the present invention in step 1627.

In step 1625, upon receiving from the MS the MOB_HO-IND message which informs that the MS confirms the handover request, the BS may send an MSHO-notify message to the RS to inform of the handover of the MS as in step 1429.

As described above, the present invention provides an apparatus and method for supporting an MS-initiated handover in a multi-hop relay BWA communication system. Therefore, an MS can select a target node and data communications are carried out seamlessly through the target node. The inventive technique for processing information about candidate nodes in an RS as described above reduces the delay of handover control messages during transmission/reception.

While the invention has been shown and described with reference to certain preferred embodiments thereof, it will be understood by those skilled in the art that various changes in form and details may be made therein without departing from the spirit and scope of the invention as defined by the appended claims.

## Claims

1. A method of requesting a handover in a Mobile Station (MS) in a wireless access communication system, comprising the steps of:
determining whether a handover is required by measuring strengths of signals received from neighbor Base Stations (BSs) and neighbor Relay Stations (RSs);
sending to a serving station a handover request message including MS-recommended target neighbor node list information, if the handover is required; and
receiving from the serving station a handover response message including serving station-recommended target neighbor node list information.

2. The method of claim 1, wherein the handover request message includes at least one of a management message type indicating type of a transmitted message, total number of MS-recommended target neighbor nodes, Identifiers (IDs) of the MS-recommended target neighbor nodes, and preamble indexes and signal strength measurements of the MS-recommended target neighbor nodes.

3. The method of claim 1, wherein the handover response message includes at least one of a management message type indicating type of a transmitted message, a serving station-recommended target neighbor node list, Identifiers (Ids) of serving station-recommended target neighbor nodes, preamble indexes of the serving station-recommended target neighbor nodes, and service levels that the serving station-recommended target neighbor nodes can provide when the MS performs a handover to the serving station-recommended target neighbor nodes.

4. The method of claim 1, further comprising determining whether to confirm, cancel or reject the handover based on the serving station-recommended target neighbor node list information, and sending a handover indication message to the serving station according to the determination.

5. The method of claim 4, wherein the handover indication message includes at least one of a management message type indicating the type of a transmitted message, a handover indication type, an Identifier (ID) of a target node for the handover of the MS, and a preamble index of the target node.

6. The method of claim 4, wherein the handover indication message transmitting step further comprises sending, if the MS determines to confirm the handover to a target neighbor node, a handover indication message confirming the handover to the neighbor target node to the serving station, and performing network re-entry with the target node.

7. The method of claim 4, wherein the handover indication message transmitting step further comprises sending, if the MS determines to cancel the handover, a handover indication message indicating handover cancel to the serving station, and continuing a communication procedure with the serving station.

8. The method of claim 4, wherein the handover indication message transmitting step comprises sending, if the MS determines to reject the handover, a handover indication message indicating handover reject to the serving station, and receiving from the serving station a handover response message including reconfigured serving station-recommended target neighbor node list information.

9. The method of claim 1, wherein the determining step further comprises:
acquiring information about the neighbor BSs and the neighbor RSs from the serving station and measuring the signal strengths of the neighbor BSs and the neighbor RSs based on the acquired information; and
determining that the handover is required, if a neighbor node having a greater signal strength than the serving station is detected.

10. The method of claim 1, wherein the determining step further comprises determining whether the handover is required by searching for a neighbor node to which the handover is available according to a handover request threshold.

11. The method of claim 1, wherein the neighbor node is at least one of a BS in a neighbor cell, an RS in a neighbor cell, a serving BS and a neighbor RS in a serving cell.

12. A method of supporting a Mobile Station (MS)-initiated handover in a serving Base Station (BS) in a wireless access communication system, comprising the steps of:
receiving from an MS a handover request message including MS-recommended target neighbor node list information;
configuring new handover request messages, sending the new handover request messages to target neighbor nodes listed in the MS-recommended target neighbor node list information, and receiving from the target neighbor nodes handover response messages including information indicating whether the handover of the MS is supported, and handover information required for the handover of the MS;
configuring a serving BS-recommended target neighbor node list information using the received information; and
configuring a new handover response message including the serving BS-recommended target neighbor node list information and sending the new handover response message to the MS.

13. The method of claim 12, wherein the handover request message includes at least one of a management message type indicating type of a transmitted message, total number of MS-recommended target neighbor nodes, Identifiers (IDs) of the MS-recommended target neighbor nodes, preamble indexes and signal strength measurements of the MS-recommended target neighbor nodes, and MS ID encoding information.

14. The method of claim 12, wherein if a target neighbor node is a neighbor cell node, a new handover request message sent to the target neighbor node includes at least one of a global header indicating that a transmitted message is a backbone message, an Identifier (ID) of the MS requesting the handover, a bandwidth required by the MS, a service level required by the MS, a list of neighbor nodes to which the MS intends to perform the handover, and IDs of the neighbor nodes.

15. The method of claim 14, wherein a handover response message received from the target neighbor node includes at least one of a global header indicating that a transmitted message is a backbone message, the ID of the MS requesting the handover, information about a neighbor cell node list available for the handover of the MS, IDs of neighbor cell nodes in the neighbor cell node list, bandwidths that the neighbor cell nodes can provide for the MS, and service levels that the neighbor cell nodes can provide for the MS.

16. The method of claim 12, wherein if a target neighbor node is a serving cell node, a new handover request message sent to the target neighbor node includes at least one of a management message type indicating type of a transmitted message, an Identifier (ID) of the MS requesting the handover, and a bandwidth and a service level required by the MS.

17. The method of claim 16, wherein a handover response message received from the target neighbor node includes at least one of a management message type indicating the type of a transmitted message, the ID of the MS requesting the handover, a bandwidth that a Relay Station (RS) provides for the MS, and a service level that the RS provides for the MS when the MS performs the handover to the RS.

18. The method of claim 12, wherein the new handover response message includes at least one of a management message type indicating type of a transmitted message, a serving BS-recommended target neighbor node list, Identifiers (Ids) of serving BS-recommended target neighbor nodes, and preamble indexes, and service levels that the serving BS-recommended target neighbor nodes can provide when the MS performs the handover to the serving BS-recommended target neighbor nodes.

19. The method of claim 12, further comprising monitoring reception of a handover indication message from the MS.

20. The method of claim 19, wherein the handover indication message includes at least one of a management message type indicating the type of a transmitted message, a handover indication type, an ID of a target node for the handover of the MS, and a preamble index of the target node.

21. The method of claim 19, further comprising the steps of:
determining whether the target node is the serving BS, a serving cell RS, or a neighbor cell node, upon receipt of a handover indication message confirming the handover;
performing network re-entry with the MS, if the target node is the serving BS;
sending a handover notify message to the target node, if the target node is the serving cell RS; and
sending a handover confirm message to a neighbor cell BS managing the neighbor cell node and releasing a connection from the MS, if the target node is the neighbor cell node.

22. The method of claim 21, wherein the handover notify message includes at least one of a management message type indicating type of a transmitted message, an Identifier (ID) of the MS, and a bandwidth and a service level that the target node provides when the MS performs the handover to the target node.

23. The method of claim 21, wherein the handover confirm message includes at least one of a global header indicating that a transmitted message is a backbone message, an Identifier (ID) of the MS to perform the handover, an ID of the target node in a neighbor cell, and a bandwidth and a service level that the target node provides when the MS performs the handover to the target node.

24. The method of claim 19, further comprising ending, upon receipt of a handover indication message indicating handover cancel, a handover procedure and continuing communications with the MS.

25. The method of claim 19, further comprising reconfiguring, upon receipt of a handover indication message indicating handover reject, the serving BS-recommended target neighbor node list information and sending to the MS a new handover response message with the reconfigured serving BS-recommended target neighbor node list information.

26. A method of supporting a Mobile Station (MS)-initiated handover in a serving Relay Station (RS) in a wireless access communication system, comprising the steps of:
adding, upon receipt of a handover request message from an MS, MS Identifier (ID) encoding information to the handover request message and sending the handover request message with the MS ID encoding information to a Base Station (BS);
receiving a handover response message including the MS ID encoding information from the BS; and
eliminating the MS ID encoding information from the handover response message and sending the handover response message without the MS ID encoding information to the MS.

27. The method of claim 26, further comprising the steps of:
receiving a handover indication message indicating handover confirm, handover cancel, or handover reject from the MS; and
adding the MS ID encoding information to the handover indication message and sending the handover indication message with the MS ID encoding information to the BS.

28. The method of claim 27, further comprising the steps of:
releasing a connection from the MS, if the handover indication message confirms a handover;
ending a handover procedure and continuing communications with the MS, if the handover indication message indicates handover cancel; and
receiving a reconfigured handover response message from the BS, if the handover indication message indicates handover reject.

29. The method of claim 26, wherein the handover request message includes at least one of a management message type indicating type of a transmitted message, total number of MS-recommended target neighbor nodes, IDs of the MS-recommended target neighbor nodes, and preamble indexes and signal strength measurements of the MS-recommended target neighbor nodes.

30. The method of claim 26, wherein the handover response message includes at least one of a management message type indicating type of a transmitted message, a BS-recommended target neighbor node list, IDs of BS-recommended target neighbor nodes, preamble indexes of the BS-recommended target neighbor nodes, service levels that the BS-recommended target neighbor nodes can provide when the MS performs the handover to the BS-recommended target neighbor nodes, and the MS ID encoding information.

31. The method of claim 27, wherein the handover indication message includes at least one of a management message type indicating type of a transmitted message, a handover indication type, an Identifier (ID) of a target node for the handover of the MS, and a preamble index of the target node.

32. A method of supporting a Mobile Station (MS)-initiated handover in a serving Relay Station (RS) in a wireless access communication system, comprising the steps of:
receiving from an MS a handover request message including MS-recommended target neighbor node list information;
reconfiguring target neighbor node list information using the handover request message; and
sending to the MS a handover response message including the reconfigured target neighbor node list information.

33. The method of claim 32, further comprising the steps of:
receiving from the MS a handover indication message indicating handover confirm, handover cancel or handover reject;
releasing a connection from the MS, if the handover indication message confirms a handover;
ending a handover procedure and continuing communications with the MS, if the handover indication message indicates handover cancel; and
reconfiguring the target neighbor node list information and sending to the MS a handover response message with the reconfigured target neighbor node list information, if the handover indication message indicates handover reject.

34. The method of claim 33, wherein the handover indication message includes at least one of a management message type indicating type of a transmitted message, a handover indication type, an Identifier (ID) of a target node for the handover of the MS, and a preamble index of the target node.

35. The method of claim 33, further comprising adding MS ID encoding information to the handover indication message and sending the handover indication message with the MS ID encoding information to the BS.

36. The method of claim 33, further comprising sending a handover notify message to the target node, if the handover indication message confirms a handover.

37. The method of claim 36, wherein the handover notify message includes at least one of a management message type indicating type of a transmitted message, an Identifier (ID) of the MS to perform a handover to the target node that will receive the handover notify message, a bandwidth and a service level that the target node provides when the MS performs the handover to the target node, and MS ID encoding information.

38. The method of claim 32, wherein the handover request message includes at least one of a management message type indicating type of a transmitted message, total number of MS-recommended target neighbor nodes, Identifiers (Ids) of the MS-recommended target neighbor nodes, and preamble indexes and signal strength measurements of the MS-recommended target neighbor nodes.

39. The method of claim 32, wherein the handover response message includes at least one of a management message type indicating type of a transmitted message, a serving station-recommended target neighbor node list, Identifiers (Ids) of serving station-recommended target neighbor nodes, preamble indexes of the serving station-recommended target neighbor nodes, and service levels that the serving station-recommended target neighbor nodes can provide when the MS performs the handover to the serving station-recommended target neighbor nodes.

40. The method of claim 32, wherein the reconfiguration step comprises the steps of:
sending, in the presence of a downlink/uplink RS in the MS-recommended target neighbor node list information, a handover request inform message indicating the handover request of the MS to the downlink/uplink RS;
sending the handover request message to a serving BS, if a target neighbor node other than the downlink/uplink RS of the serving RS is included in the MS-recommended target neighbor node list, or if the serving RS cannot acquire information about the downlink/uplink RS; and
reconfiguring, upon receipt of a handover response message including handover information of neighbor nodes from the downlink/uplink RS or the serving BS, the target neighbor node list information referring to the received handover information.

41. The method of claim 40, wherein the handover request inform message includes at least one of a management message type indicating a transmitted message, an Identifier (ID) of the MS requesting the handover, and a bandwidth and a service level required by the MS when the MS performs the handover.

42. The method of claim 41, wherein the handover response message includes at least one of a management message type indicating a transmitted message, the Identifier (ID) of the MS that will perform the handover, and a bandwidth and a service level that the RS provides when the MS performs the handover.

43. The method of claim 40, wherein each of the handover request message sent to the serving BS and the handover response message received from the serving BS includes MS Identifier (ID) encoding information.

44. A method of supporting a Mobile Station (MS)-initiated handover in a serving Base Station (BS) in a wireless access communication system, comprising the steps of:
receiving from a serving Relay Station (RS) a handover request message including MS-recommended target neighbor node list information;
sending a new handover request messages to a neighbor cell BS managing a neighbor cell node, if the neighbor cell node is included in the MS-recommended target neighbor node list information;
sending a handover request inform message to a serving cell node, if the serving cell node is included in the MS-recommended target neighbor node list information;
receiving a handover response message including handover information of the MS from the neighbor cell BS or the serving cell node; and
sending to the serving RS a new handover response message including the handover information of the MS.

45. The method of claim 44, wherein the handover request message includes at least one of a management message type indicating type of a transmitted message, total number of MS-recommended target neighbor nodes, Identifiers (IDs) of the MS-recommended target neighbor nodes, preamble indexes and signal strength measurements of the MS-recommended target neighbor nodes, and MS ID encoding information.

46. The method of claim 44, wherein the new handover request message includes at least one of a global header indicating that a transmitted message is a backbone message, an Identifier (ID) of the MS requesting the handover, a bandwidth required by the MS, a service level required by the MS, a list of neighbor nodes that the MS intends to perform the handover to, and IDs of the neighbor nodes.

47. The method of claim 44, wherein the handover request inform message includes at least one of a management message type indicating a transmitted message, an Identifier (ID) of the MS requesting the handover, and a bandwidth and a service level required by the MS when the MS performs the handover.

48. The method of claim 44, wherein the handover response message received from the neighbor cell BS includes at least one of a global header indicating that a transmitted message is a backbone message, an Identifier (ID) of the MS requesting the handover, information about a neighbor cell node list available for the handover of the MS, IDs of neighbor cell nodes in the neighbor cell node list, and bandwidths and service levels that the neighbor cell nodes can provide for the MS.

49. The method of claim 44, wherein the handover response message received from the serving cell node includes at least one of a management message type indicating a transmitted message, an Identifier (ID) of the MS that will perform the handover, a bandwidth that an RS as a target node provides when the MS performs the handover, and a service level that the RS provides when the MS performs the handover.

50. The method of claim 44, wherein the new handover response message sent to the serving RS includes at least one of a management message type indicating type of a transmitted message, a serving station-recommended target neighbor node list, Identifiers (Ids) of serving station-recommended target neighbor nodes, preamble indexes of the serving station-recommended target neighbor nodes, service levels that the serving station-recommended target neighbor nodes can provide when the MS performs the handover to the serving BS-recommended target neighbor nodes, and MS ID encoding information.

51. The method of claim 44, further comprising the steps of:
receiving from the serving RS a handover indication message confirming the handover;
determining a target node for the handover of the MS from the handover indication message;
sending a handover confirm message to a neighbor cell BS managing the neighbor cell node and releasing a connection from the MS, if the target node is the neighbor cell node;
performing network re-entry with the MS, if the target node is the serving BS;
recognizing that the MS will perform the handover to the target node, if the target node is a serving cell RS included in a downlink/uplink RS list of the serving RS; and
sending a handover notify message to the target node, if the target node is a serving cell RS not included in the downlink/uplink RS list of the serving RS.

52. The method of claim 51, wherein the handover indication message includes at least one of a management message type indicating type of a transmitted message, a handover indication type, an Identifier (ID) of the target node for the handover of the MS, and a preamble index of the target node.

53. The method of claim 51, wherein the handover notify message includes at least one of a management message type indicating type of a transmitted message, an Identifier (ID) of the MS, and a bandwidth and a service level that the target node provides when the MS performs the handover to the target node.

54. The method of claim 51, wherein the handover confirm message includes at least one of a global header indicating that a transmitted message is a backbone message, an Identifier (ID) of the MS to perform the handover, the ID of the target node in a neighbor cell, and a bandwidth and a service level that the target node provides when the MS performs the handover to the target node.

55. A method of supporting a Mobile Station (MS)-initiated handover in a cell Base Station (BS) in a wireless access communication system, comprising the steps of:
receiving from a neighbor cell BS a handover request message of an MS belonging to the neighbor cell BS;
determining whether each candidate node supports a handover of the MS based on the handover request message; and
sending to the neighbor cell BS a handover response message including information indicating whether the handover of the MS is supported, and handover information of the MS.

56. The method of claim 55, wherein the handover request message includes at least one of a global header indicating that a transmitted message is a backbone message, an Identifier (ID) of the MS requesting the handover, a bandwidth and a service level required by the MS, a list of neighbor nodes to which the MS intends to perform the handover, and IDs of the neighbor nodes.

57. The method of claim 55, wherein the handover response message includes at least one of a global header indicating that a transmitted message is a backbone message, an Identifier (ID) of the MS requesting the handover, information about a neighbor cell node list available for the handover of the MS, IDs of neighbor cell nodes in the neighbor cell node list, and bandwidths and service levels that the neighbor cell nodes can provide for the MS.

58. The method of claim 55, wherein the determining step further comprises determining whether the each candidate node supports the handover of the MS based on a required bandwidth and a required service level included in the handover request message.

59. The method of claim 55, further comprising the steps of:
receiving from the neighbor cell BS a handover confirm message indicating that the MS determines to perform the handover to a target node managed by the neighbor cell BS;
determining whether the target node is a BS based on the handover confirm message and performing network reentry with the MS, if the target node is the BS; and
sending a handover notify message to the target node, if the target node is an RS.

60. The method of claim 59, wherein the handover notify message includes at least one of a management message type indicating type of a transmitted message, an Identifier (ID) of the MS, and a bandwidth and a service level that the target node provides when the MS performs the handover to the target node.

61. The method of claim 59, wherein the handover confirm message includes at least one of a global header indicating that a transmitted message is a backbone message, an Identifier (ID) of the MS to perform the handover, an ID of the target node in a neighbor cell, and a bandwidth and a service level that the target node provides when the MS performs the handover to the target node.

62. A method of supporting a Mobile Station (MS)-initiated handover in a neighbor Relay Station (RS) in a wireless access communication system, comprising the steps of:
receiving a handover request inform message from a serving station during a normal communication procedure;
determining whether to support a handover of an MS according to the handover request inform message, and sending a handover request response message including handover information of the MS to the serving station.

63. The method of claim 62, wherein the handover request inform message includes at least one of a management message type indicating a transmitted message, an Identifier (ID) of the MS requesting the handover, and a bandwidth and a service level required by the MS when the MS performs the handover.

64. The method of claim 62, wherein the handover request response message includes at least one of a management message type indicating a transmitted message, an Identifier (ID) of the MS that will perform the handover, a bandwidth that the neighbor RS as a target node provides when the MS performs the handover, and a service level that the neighbor RS provides when the MS performs the handover.

65. The method of claim 62, further comprising the steps of:
monitoring reception of a handover notify message from the serving station; and
performing network reentry with the MS, upon receipt of the handover notify message.

66. The method of claim 65, wherein the handover notify message includes at least one of a management message type indicating type of a transmitted message, an Identifier (ID) of the MS, and a bandwidth and a service level that the neighbor RS provides when the MS performs the handover to the neighbor RS.

67. An apparatus for supporting a Mobile Station (MS)-initiated handover in a wireless access communication system, comprising:
an MS for determining whether a handover is required, sending to a serving Base Station (BS) or a serving Relay Station (RS) a handover request message including an MS-recommended target node list, if the handover is required, receiving a handover response message from the serving BS or the serving RS, and determining whether to confirm, cancel, or reject the handover; and
the serving BS for, upon receipt of the handover request message from the MS or an RS, notifying target neighbor nodes of the possible handover of the MS, acquiring information indicating whether the handover is supported and handover information from the target neighbor nodes, and sending to the MS or the RS the handover response message including a serving BS-recommended target neighbor node list.

68. The apparatus of claim 67, wherein the MS generates a handover indication message according to whether the handover is required, sends the handover indication message to the serving BS or the serving RS, and performs network reentry with a target node according to the determination.

69. The apparatus of claim 67, wherein upon receipt of a handover indication message confirming a handover to a target node from the MS or the RS, the serving BS performs network reentry with the MS, releases a connection from the MS after notifying a neighbor BS of the handover of the MS, or notifies the target node of the handover of the MS, according to whether the target node is the serving BS, a neighbor cell node or a serving cell node.

70. The apparatus of claim 67, wherein upon receipt of a handover indication message indicating handover cancel from the MS or the RS, the serving BS reconfigures a handover response message including a serving BS-recommended target neighbor node list and sends the reconfigured handover response message to the MS or the serving RS, and upon receipt of a handover indication message indicating handover reject from the MS or the serving RS, the serving BS continues to communicate with the MS.

71. The apparatus of claim 67, further comprising the serving RS for, upon receipt of the handover request message from the MS, sending the handover request message with MS Identifier (ID) encoding information to the serving BS, and upon receipt of the handover response message with the MS ID encoding information from the serving BS, removing the MS ID encoding information from the handover response message and sending to the MS the handover response message without the MS ID encoding information.

72. The apparatus of claim 71, wherein upon receipt of the handover indication message from the MS, the serving RS sends the handover indication message with the MS ID encoding information to the serving BS and determines whether to release a connection from the MS according to information included in the handover indication message.

73. The apparatus of claim 67, further comprising the serving RS for, upon receipt of the handover request message from the MS, generating target neighbor node list information to be recommended to the MS using the handover request message and sending a handover response message including the target neighbor node list information to the MS.

74. The apparatus of claim 73, wherein upon receipt of the handover indication message from the MS, the serving RS sends the handover indication message with the MS ID encoding information to the serving BS and determines whether to release a connection from the MS according to information included in the handover indication message.

75. The apparatus of claim 73, wherein the serving RS notifies target neighbor nodes included in the handover request message of a possible handover of the MS, acquires information indicating whether the handover is supported and handover information from the target neighbor nodes, and generates the target neighbor node list information to be recommended to the MS using the acquired information.

76. A method of supporting a Mobile Station (MS)-initiated handover in a Relay Station (RS) in a wireless access communication system, comprising the steps of:
forwarding, upon receipt of a handover request message from an MS, the handover request message to a Base Station (BS);
forwarding, upon receipt of a handover response message including handover information of the MS from the BS, the handover response message to the MS;
forwarding, upon receipt of a handover indication message indicating handover confirm, handover cancel or handover reject from the MS, the handover indication message to the BS; and
releasing a context from the MS, upon receipt of a handover notify message from the BS.

77. A method of supporting a Mobile Station (MS)-initiated handover in a Relay Station (RS) in a wireless access communication system, comprising the steps of:
receiving a handover request message from an MS and forwarding the handover request message to a Base Station (BS); and
configuring, upon receipt of a handover command message including a handover direction for a handover of the MS from the BS, a handover response message based on the handover direction, and sending the handover response message to the MS.

78. The method of claim 77, wherein the handover request message includes at least one of a management message type indicating type of a transmitted message, the number of MS-recommended target neighbor nodes, Identifiers (IDs) of the MS-recommended target neighbor nodes, preamble indexes of the MS-recommended target neighbor nodes, and signal strength measurements of the MS-recommended target neighbor nodes.

79. The method of claim 77, wherein the handover response message includes at least one of a management message type indicating the type of a transmitted message, a serving station-recommended target neighbor node list, IDs of serving station-recommended target neighbor nodes, preamble indexes of the serving station-recommended target neighbor nodes, and service levels that the serving station-recommended target neighbor nodes can provide when the MS performs a handover to the serving station-recommended target neighbor nodes.

80. The method of claim 77, wherein the handover command message includes a management message type indicating type of a transmitted message, a command indicator indicating the handover direction for the handover of the MS, a Connection Identifier (CID) identifying the MS to receive the handover response message according to the handover direction, IDs of target neighbor nodes being neighbor RSs or neighbor BSs to be included in the handover response message, service levels that the target neighbor nodes can provide when the MS performs a handover to the target neighbor nodes, a handover ID for use in network reentry with the target neighbor nodes, and handover process optimization information supported by the target neighbor nodes.

81. The method of claim 77, wherein the configuration step comprises the steps of:
configuring a mandatory-mode handover response message if the handover direction indicates mandatory-mode handover response message transmission; and
configuring a recommended-mode handover response message if the handover direction indicates recommended-mode handover response message transmission.

82. A method of supporting a Mobile Station (MS)-initiated handover in a Base Station (BS) in a wireless access communication system, comprising the steps of:
collecting MS handover information for an MS and determining a handover direction for the MS, upon receipt of a handover request message from the MS via a Relay Station (RS); and
configuring a handover command message including the MS handover information and the handover direction and sending the handover command message to the RS.

83. The method of claim 82, further comprising collecting MS handover information and determining a handover direction, upon receipt of a handover indication message indicating handover reject from the MS via the RS.

84. The method of claim 82, wherein the handover request message includes at least one of a management message type indicating type of a transmitted message, the number of MS-recommended target neighbor nodes, Identifiers (IDs) of the MS-recommended target neighbor nodes, preamble indexes of the MS-recommended target neighbor nodes, and signal strength measurements of the MS-recommended target neighbor nodes.

85. The method of claim 82, wherein the handover command message includes a management message type indicating the type of a transmitted message, a command indicator indicating the handover direction for the handover of the MS, a Connection Identifier (CID) identifying the MS to receive the handover response message according to the handover direction, IDs of target neighbor nodes being neighbor RSs or neighbor BSs to be included in a handover response message to be configured according to the handover direction, service levels that the target neighbor nodes can provide when the MS performs a handover to the target neighbor nodes, a handover ID for use in network reentry with the target neighbor nodes, and handover process optimization information supported by the target neighbor nodes.

86. The method of claim 83, wherein the handover indication message includes at least one of a management message type indicating type of a transmitted message, a handover indication type, an ID of a target node to which the MS will perform the handover, and MS ID encoding information.
